Europäisches Patentamt

(19) European Patent Office

Office européen des brevets

(11) Numéro de publication: **0 102 272**
**B1**

(12) **FASCICULE DE BREVET EUROPÉEN**

(45) Date de publication du fascicule du brevet:
**25.11.87**

(51) Int. Cl.⁴: **G 01 J 3/18**

(21) Numéro de dépôt: **83401539.8**

(22) Date de dépôt: **26.07.83**

(54) **Procédé de focalisation des réseaux de diffraction sphériques holographiques travaillant par réflexion, objectifs dispersifs et spectromètres en faisant application.**

(30) Priorité: **28.07.82 FR 8213205**

(43) Date de publication de la demande:
**07.03.84 Bulletin 84/10**

(45) Mention de la délivrance du brevet:
**25.11.87 Bulletin 87/48**

(84) Etats contractants désignés:
**DE FR**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Pouey, Michel, 7 Résidence les Hauts de Viroflay, F-78220 Viroflay (FR)**

(74) Mandataire: **Phélip, Bruno, c/o Cabinet Harlé & Phélip 21, rue de la Rochefoucauld, F-75009 Paris (FR)**

(56) Documents cité:
FR-A-2 124 119
FR-A-2 180 574
FR-A-2 323 132

OPTICA ACTA, vol. 28, no. 12, 1981, pages 1587-1599, Taylor & Francis Ltd., Londres, GB; B.J.BROWN et al.: "Holographic grating aberration correction for a Rowland circle mount II"
OPTICA ACTA, vol. 28, no. 12, 1981, pages 1601-1610, Taylor & Francis Ltd., Londres, GB; B.J.BROWN et al.: "Holographic grating aberration correction for a Rowland circle mount II"
JOURNAL OF THE SPECTROSCOPICAL SOCIETY OF JAPAN, vo.23, supplement no.1, 1974, M.POULEY "Imaging properties of rules and holographic grating"
Publication " Price list ruled and holographic diffraction gratings" de la société I.S.A., Jobin

(56) Documents cité: (suite)
Yvon, 91163 Longjumeau (FR), janvier 1982
VI International Conference on vacuum ultraviolet radiation physics, extended abstracts, vol.III, 2-6 juin 1980, université de Charlottesville (Virginie), J. FLAMAND et al.:"Performance analysis of toroidal grating flat field spectrographs for use in far UV", pages 1-3 (III 21)
Japanese journal of applied physics, vol. 15, no. 7, juillet 1976, pages 1181-1197, T. NAMIOKA et al.:"Design and performance of holographic concave gratings"

## Description

La présénte invention concerne un procédé de focalisation des réseaux de diffraction sphériques holographiques travaillant par réflexion pour la dispersion des différentes radiations constituant une lumière polychromatique. L'invention a également pour objet des objectifs dispersifs et des polychromateurs faisant applicatiom dudit procédé.

Les polychromateurs selon la présente invention sont des polychromateurs dans lesquels la dispersion et la focalisation des radiations incidentes polychromatiques sont assurées par un seul élément optique, un réseau concave (ou convexe).

Dans la présente invention on utilise:

-une fente d'entrée fixe réelle ou virtuelle pour le réseau (dans ce cas, la fente d'entrée est focalisée dans l'espace virtuel du réseau à l'aide d'un miroir torique travaillant en ses points stigmatiques, c'est-à-dire à grandissement un);

-un réseau fixe, de rayon de courbure R, de largeur rayée W (hauteur rayée L) ayant n traits/mm et réalisé par la méthode holographique;

-au moins une fente de sortie ou un détecteur constitué, par exemple, d'un ensemble de micro-canaux équidistants, parallèles entre eux et disposés sur une surface courbe.

La présente invention ne concerne pas les méthodes d'enregistrement de l'hologramme mais a pour objet un procédé de focalisation dans lequel l'hologramme déposé sur la surface sphérique joue un rôle actif dans la focalisation et a donc aussi pour objet la localisation spatiale des points d'enregistrement:

$$C \ (\eta, \ \rho_C = R/r_C) \ \text{et} \ D \ (\delta, \ \rho_D = R/r_D)$$

positionnés par rapport au sommet du réseau en coordonnées polaires.

La présente invention concerne en particulier les polychromateurs destinés à l'étude des profils des raies, c'est-à-dire ceux pour lesquels la réponse percussionnelle est symétrique, condition essentielle pour une application aisée des méthodes classiques de déconvolution.

On sait que si le polychromateur était parfaitement corrigé des aberrations, la réponse percussionnelle serait une fonction du type $(\frac{\sin x}{x})^2$ caractérisant la diffraction par une pupille rectangulaire (montage dit stigmatique).

Les aberrations du 4ème ordre (aberration sphérique généralisée) ne provoquent qu'un élargissement symétrique; par contre, la courbure d'astigmatisme et les termes de comas produisent un élargissement dissymétrique qui doit être rendu nul ou négligeable (les tolérances seront alors déduites des critères de qualité d'image connus).

Dans l'art antérieur, on connaît un polychromateur travaillant avec une fente d'entrée fixe, un réseau fixe, un détecteur fixe dont tous les éléments sont sur un cercle de diamètre ROW dit cercle de Rowland [cf. J.A.R. Sampson, Techniques of Vacuum Ultraviolet Spectroscopy (Wiley, New York, 1967)]. Toutefois tous les montages sur le cercle de Rowland ne satisfont pas au critère de qualité requis.

Par ailleurs, on sait qu'un réseau holographique à distribution de traits non uniforme peut donner des images stigmatiques (cf. brevet FR-A-20 98 665 et son certificat d'addition FR-A-22 40 445), c'est-à-dire corrigées de toutes les aberrations, si les points d'enregistrement et les points objects et images sont conjugués harmoniques par rapport au cercle de rayon ROW, ayant pour centre le centre de courbure du réseau.

La publication de T. Namioka et al "Design and performance of holographic concave gratings" pages 1185 à 1186 paragraphes 2-3 dans "Japanese Journal of Applied Physics" vol.15, N°7 Juillet 1976 pages 1181 à 1197 décrit et illustre un objectif dispersif comportant un réseau de diffraction sphérique holographique de rayon de courbure travaillant par réflexion corrigé de l'astigmatisme et des comas.

Le document de référence JOBIN YVON division d'Instruments S.A. de Janvier 1982 intitulé "Price list ruled and holographic diffraction gratings" dans le schéma "Flat field" (table 6 Flat field and monographs gratings) illustre un polychromateur comportant une fente située à une distance fixe d'un réseau de diffraction sphérique holographique travaillant par réflexion pour la dispersion des différentes radiations constituant une lumière polychromatique travaillant dans les ordres positifs pour les longueurs d'ondes

$$\lambda^x - \Delta\lambda \ < \ \lambda^x \ < \ \lambda^x + \Delta\lambda$$

Le rapport d'harmonicité dépend de la longueur d'onde d'enregistrement $\lambda_o$, ce qui signifie qu'actuellement cette solution ne peut pas toujours être appliquée dans l'ultraviolet lointain (valeur élevée du rapport $\lambda_o/\lambda$).

Conformément aux enseignements théoriques et pratiques de l'art antérieur concernant les réseaux de diffraction sphériques, le lieu de focalisation est déterminé en fonction de la position des focales tangentielles objet et image.

Tous les dispositifs spectroscopiques sont dérivés de cette notion universellement admise.

Dans la présente invention, on s'écarte radicalement de cette notion et de façon tout à fait inattendue, contrairement aux enseignements de l'art antérieur, on considère tant un procédé que des dispositifs dans lesquels le lieu de focalisation est déterminé en fonction de la position des focales sagittales objet et image.

Pour autant qu'on le sache, un tel mode de mise en oeuvre, qui va à l'encontre de la technique généralement admise et qui permet l'obtention d'images dont la qualité est seulement limitée par la diffraction, n'a jamais été réalisé jusqu'à ce jour.

Comme on l'a déjà indiqué, l'art antérieur Optica Acta 1981 vol.28 N°12 1587-1599 décrit un procédé de focalisation des réseaux de diffraction sphériques holographiques de rayon de courbure R, travaillant par réflexion pour la dispersion des différentes radiations constituant une lumière polychromatique, selon lequel on utilise une fente d'entrée et au moins une fente de sortie ou un détecteur multicanal fixes, le réseau holographique étant fixe qui prévoyait, pour l'obtention d'images stigmatiques, un déplacement de la focale sagittale vers la focale tangentielle. On choisissait donc la surface (sphérique ou torique) et une distribution de traits (uniforme ou non uniforme) pour obtenir une image corrigée des aberrations dans le plan de la focale tangentielle.

Avec une telle technique, on ne peut pas maitriser la correction des aberrations d'ordre impair de façon à ce qu'elles demeurent inférieures à la longueur d'onde, autrement dit, on ne peut pas obtenir d'images dont la qualité soit limitée par la diffraction à n'importe quelle longueur d'onde, ni dans un intervalle spectral large.

Dans l'art antérieur on a proposé que les déformations de la surface d'onde sphérique incidente dans l'espace objet soient compensées par celles résultant dans l'espace image de la position du point image.

Une telle solution implique de nombreux inconvénients et de nombreuses limitations, à savoir que les réalisations ne couvrent pas tout le plan et ne permettent pas d'obtenir le stigmatisme aux très courtes longueurs d'onde (inférieures à 100 nanomètres), les longueurs d'onde de stigmatisme étant toujours proportionnelles à la longueur d'onde d'enregistrement de l'hologramme actuellement 487,9 nanomètres.

L'homme de l'art sait que les notions de focale tangentielle ou sagittale impliquent un montage aberrant (c'est-à-dire avec des défauts).

L'intuition originale selon la présente invention a consisté à supposer qu'il soit possible d'avoir un montage parfait supprimant les aberrations d'ordre impair, dans ce cas il n'y a pas de raison de déduire la position du sommet du réseau, de l'objet et des images de la seule équation générale de la focale tangentielle; si le montage est stigmatique, focales tangentielle et sagittale sont confondues, et la nouvelle expression de la focalisation doit alors permettre de couvrir tous les points du plan par action appropriée des variations de phase générées par l'hologramme. Cette nouvelle expression de la focalisation s'appuie, dans la présente invention, sur l'expression littérale de la focale sagittale assortie d'une condition spécifique sur les points d'enregistrement de l'hologramme; les aberrations d'ordre pair sont alors soit nulles soit négligeables au sens du critère de Strehl.

Pour résoudre ce problème, la présente invention consiste en particulier à dissocier l'espace objet et l'espace image. Dans ce cas, la surface d'onde incidente sphérique reste sphérique dans l'espace objet après interaction avec le réseau et reste sphérique de même dans l'espace image.

Il importe d'observer que bien que les dispositifs selon l'invention puissent être utilisés, du point de vue spectral, à n'importe quelle longueur d'onde $\lambda$, les réalisations indiquées concerneront plus particulièrement l'ultraviolet proche et lointain, c'est-à-dire les longueurs d'ondes inférieures à 300 nm (nanomètres).

L'invention propose donc un procédé de focalisation d'un réseau de diffraction sphérique holographique de rayon de courbure R, travaillant par réflexion pour la dispersion des différentes radiations constituant une lumière polychromatique, selon lequel on utilise une fente d'entrée et au moins une fente de sortie ou un détecteur multicanal fixes, le réseau holographique étant fixe, caractérisé en ce que pour une longueur d'onde $\lambda$ et un ordre de diffraction $\underline{m}$, tels que $m\,n\lambda = \sin\alpha + \sin\beta$ et pour une distance objet r + Re $\underline{e}$ étant la distance objet réduite par rapport à la valeur du rayon de courbure R du réseau et un angle d'incidence $\alpha$ quelconques, on détermine pour l'angle de diffraction $\beta$ la distance image $r' = Re'$ $\underline{e}'$ étant la distance image réduite par rapport au rayon de courbure R du réseau par la relation:

$$\frac{1}{e} - \cos\alpha + \frac{1}{e'} - \cos\beta + \left(\frac{\sin\alpha + \sin\beta}{n\,\lambda_o}\right)(k_2 - k'_2) = 0$$

$$k_2 = \rho\,c\text{-}\cos\eta \text{ et } k'_2 = \rho_D\text{-}\cos\delta$$

correspondant à la somme des équations des focales sagittales objet et image, relations dans lesquelles $\underline{n}$ représente le nombre de traits par mm du réseau holographique réalisé à la longueur d'onde laser $\lambda_o$ à partir de l'enregistrement de franges d'interférences générées par deux points sources C et D définis par leurs coordonnées polaires respectivement par rapport au sommet du réseau pour le point

C $\quad r_c = R/\rho_{c_D}$
$\quad\quad \eta$ $\qquad\qquad$ et

pour le point D $\quad r_D = R/\rho$
et tels que $\quad\quad \delta$

$$\rho_c = \frac{\sin\alpha}{e} = V; \qquad _D\sin\delta = \frac{\sin\beta}{e} = V'$$

V et V' étant des constantes pouvant être égales entre elles. La répartition d'intensité de l'image diffractée obtenue étant symétrique.

La présente invention a également pour objet un objectif dispersif comportant un réseau de diffraction sphérique holographique de rayon de courbure R travaillant par réflexion corrigé de l'astigmatisme et des comas dans lequel la source et l'un des points d'enregistrement sont sur la normale au réseau ayant $n = \sin\delta/\lambda_o$

traits/mm, $\lambda_o$ étant la longueur d'onde d'enregistrement de l'hologramme et tel que le point d'enregistrement est à une distance $r_c$ du sommet du réseau de rayon de courbure R et le point source à une distance r telle que $\frac{1}{r} = \frac{1+P}{R} - \frac{P}{r_{c_0}}$, le lieu des images diffractées suivant l'angle $\lambda$ tel que, m étant l'ordre de diffraction $\sin \beta = mn \lambda$. avec $P = \frac{m\lambda}{\lambda_o}$ étant un cercle de rayon $R/2 \sin \delta = R/2 \cos \beta_0$, centré sur le rayon diffracté correspondant à la direction $\sin \beta_0 = \cos \delta$ et passant par le sommet du réseau et son centre de courbure, le second point d'enregistrement étant défini en coordonnées polaires par $r_D$ et $\delta$ tel que $\sin \delta = n\lambda_o$ et $r_D = \frac{r'\lambda_o}{m\lambda}$, r' étant la distance image caractérisée par toute distance du sommet du réseau au cercle précité.

La présente invention propose également un polychromateur comportant une fente située à une distance fixe d'un réseau de diffraction sphérique holographique travaillant par réflexion pour la dispersion des différentes radiations constituant une lumière polychromatique travaillant dans les ordres positifs pour les longueurs d'ondes $\lambda^x - \Delta\lambda < \lambda_x < \lambda_x + \Delta\lambda$ dans lequel la direction du rayon diffracté correspondant à la longueur d'onde $\lambda^x$ répond à la formule: $mn \lambda^x = \sin \beta^x = \cos \delta = 0,6077$ et dans lequel le lieu de focalisation est un plan faisant un angle d'environ $73°8$ avec la direction du rayon diffracté, la distance image pour la longueur d'onde $\lambda^x$ ayant pour valeur $r' = R \cos \beta^{x-1} = R \sin \delta^{-1} = 1,26\, R$.

La présente invention fournit également un objectif dispersif du type ci-dessus dans lequel le point d'enregistrement situé sur la normale au réseau étant à une distance $r_c = \frac{-r\lambda_o}{\lambda m}$, du sommet du réseau de rayon de courbure R, le point source est situé à une distance $r = R \left(\frac{1-m\lambda}{\lambda_o}\right)$ de ce même sommet.

La présente invention fournit également un objectif dispersif pour lequel le lieu des points objets est un cercle de rayon $R/[(2 \mid \sin \eta \mid)] = R/(2 \cos \alpha_0)$ centré dans la direction $\pm \sin \alpha_0 = \cos \eta$ passant par le sommet du réseau et son centre de courbure, $\alpha$ étant l'angle d'incidence, l'un quelconque des points objets étant à une distance $r = Re$ du sommet du réseau telle que $r = R [\sin \alpha \cotg \eta + \cos \alpha]$, le point d'enregistrement C étant défini en coordonnées polaires par $\eta$ et sa distance $r_c$ au sommet du réseau telle que $r_c = - r/P$ avec $p = m \lambda/\lambda_o$, m étant l'ordre de diffraction et $\lambda_o$ la longueur d'onde d'enregistrement de l'hologramme tel que $\sin \alpha = -P \sin \eta$, le lieu des images diffractées suivant l'angle $\beta$ avec $\sin = P \sin$ étant un cercle de rayon $R/(2 \sin \delta) = R/(2 \cos \beta_0)$ centré sur le rayon diffracté correspondant à la direction $\sin \beta_0 = \cos \delta$ et passant par le sommet du réseau et son centre de courbure, l'un quelconque des points image étant à une distance $r' = Re'$ du sommet du réseau telle que $r' = R[\sin \beta \cotg \delta + \cos \beta]$, le second point d'enregistrement étant défini par $P \sin \delta = \sin \beta$ et par sa distance $r_D$ au sommet du réseau telle que $r_d = r'/P$.

La présente invention propose en outre un objectif dispersif dans lequel l'objet est situé sur la normale au réseau, la direction d'observation correspondant à un angle de diffraction $\beta$ inférieur à 45°, l'un des points d'enregistrement étant situé sur la normale au réseau et le second dans la direction $\delta$ tel que $\delta + \beta = \varepsilon$, étant une quantité positive très petite vis-à-vis de $\delta$ et $\beta$, ledit objectif travaillant dans les ordres négatifs.

La présente invention a encore pour objet un objectif dispersif dans lequel l'objet étant situé à l'infini sur la normale au réseau, la longueur d'onde d'observation $\lambda$ correspondant à l'angle de diffraction $\beta$ tel que: $\sin \beta = P \sin \delta$ avec $P = m \lambda/\lambda_o$ est observée sur le cercle de rayon $R/(2 \sin \delta)$, l'un des points d'enregistrement C étant situé sur la normale au réseau à une distance $r_c = RP/(P + 1)$.

La présente invention propose également un objectif dispersif dans lequel pour un faisceau venant de l'infini sous un angle $\alpha$ tel que $\sin \alpha = P \delta \sin$, avec $P = m \lambda/\lambda_o$, m étant l'ordre d'interférence et $\lambda_o$ la longueur d'onde d'enregistrement de l'hologramme, l'image diffractée se forme au centre de courbure du réseau, les points d'enregistrement de l'hologramme $C[\eta, r_c = \infty]$ et $D [\delta, r_D = \infty]$ étant positionnés angulairement par rapport à la normale au réseau de telle sorte que $\delta + \eta = 2 \alpha + \pi$.

La présente invention concerne aussi un objectif dispersif dans lequel pour un faisceau incident venant de l'infini sous un angle $\alpha$ tel que $\sin \alpha = P \delta \sin$ avec $P = m \lambda/\lambda_o$, m étant l'ordre d'interférence et $\lambda_o$ la longueur d'onde d'enregistrement, l'image se forme à la distance $r' = \overline{R} \sin \delta [\sin \delta + \sin (\delta - \alpha = ]^{-1}$, l'un des points d'enregistrement C étant au centre de courbure et l'autre D à l'infini incliné d'un angle $\delta$ par rapport à la normale au réseau.

La présente invention propose, de plus, un objectif dispersif dans lequel pour un faisceau incident venant de l'infini sous un angle $\alpha$ le faisceau diffracté sous un angle $\beta$, est diffracté à l'infini, l'angle entre lesdits faisceaux au sommet dudit objectif étant $\alpha - \beta = 2 \theta$, tel que $m \lambda = 2 \lambda_o \cos \theta$, m étant l'ordre de diffraction et $\lambda_o$ la longueur d'onde d'enregistrement de l'hologramme, l'un des points sources (C) étant au centre de courbure dudit objectif et l'autre (D) étant à l'infini incliné d'un angle $\delta$ par rapport à la normale audit objectif, angle égal à celui formé par la normale à l'objectif et la bissectrice de l'angle $2 \theta$.

La présente invention a aussi pour objet un polychromateur, travaillant dans les ordres négatifs, pour les longueurs d'ondes

$$\lambda^x - \Delta\lambda < \lambda^x < \lambda^x + \Delta\lambda$$

dans lequel la direction du rayon diffracté correspondant à la longueur d'onde $^x$ répond à la formule $mn \lambda^x = \sin \beta^x$, avec $\tg \beta^x = -\sin \delta (\sin \delta + \cos \delta)$ avec $\delta > 45°$, le lieu de focalisation étant un cercle centré sur le centre du cercle de Rowland et de rayon $R_c = \frac{R}{2} \left(\frac{\sin \delta + \cos \delta}{\sin \delta}\right)$.

Dans le polychromateur stigmatique de l'invention, le point source et le point image sont situés sur un cercle dont le rayon est centré sur la tangente au sommet du réseau et qui passe par ce sommet, ledit réseau étant un réseau holographique tel que si $\lambda_o$ est la longueur d'onde du laser servant à l'enregistrement et n le nombre de traits par mm tel que $n \lambda_o = \sin \delta - \sin \eta$, l'hologramme est réalisé à partir de deux points sources C $(\eta, r_c)$; et D$(\delta, r_D)$ dont la position est définie en coordonnées polaires et tel que $r_c = a R \sin \eta$ et $r_D = aR \sin \delta$, a étant un

4

nombre positif pouvant prendre n'importe quelle valeur entière ou fractionnaire différente de 0.

Dans un mode de réalisation du polychromateur stigmatique de la présente invention, il est prévu un miroir torique travaillant au grandissement 1 qui donne du point source une image située sur le cercle précité dont le rayon est centré sur la tangente au sommet du réseau et qui passe par ce sommet, ladite image jouant le rôle d'objet virtuel pour le réseau qui en donne une image réelle stigmatique située sur ledit cercle.

Divers avantages et caractéristique de l'invention ressortiront de la description détaillée ci-après faite en regard des dessins annexés sur lesquels:

Fig. 1 illustre des montages de spectromètre selon l'art antérieur;

Fig. 1A illustre le schéma optique d'un réseau d'un point lumineux A (r, α, z) sur la fente d'entrée, d'un point image B (r', β, z'); P (u, w, φ) étant un point situé sur le $n^{ieme}$ trait compté à partir de l'origine O; C (η, $r_c$) et D(δ, $r_D$) étant les points sources lumineux utilisés pour l'enregistrement de l'hologramme;

Fig. 2 montre le lieu de focalisation des images S'(cercle $P_1$) corrigées de l'astigmatisme et de la coma pour un point source S situé sur la normale au réseau $R_1$, l'un des points C d'enregistrement de l'hologramme étant également sur la normale au réseau $R_1$, Row étant le cercle de Rowland (lieu des focales tangentielles) et ladite figure 2 considérant le cas de longueurs d'onde $\lambda_1$ et $\lambda_2$ portées sur le cercle en pointillé;

Fig. 3 montre le lieu de focalisation (cercle $P_2$) des images corrigées de l'astigmatisme et de la coma pour plusieurs longueurs d'ondes obtenues avec un seul réseau;

Fig. 4 est une variante de la figure 3;

Fig. 5 montre les longueurs d'onde de stigmatisme obtenues dans les montages selon les figures 3 et 4 en fonction d'un paramètre caractérisant l'hologramme;

Figs. 6A, 6B, 6C illustrent un support de réseau à paramètres da réglage independants;

Figs. 7A, 7B, 7C illustrent en coupes une fente à ouverture symétrique.

Fig. 8 montre le lieu des points objets situés à distance finie pour l'obtention d'une image strictement stigmatique.

Fig. 9 montre les différents cercles d'obtention d'une image dont la qualité n'est limitée que par les aberrations du 4ème ordre.

Fig. 10 illustre un schéma pour un objet et une image à l'infini.

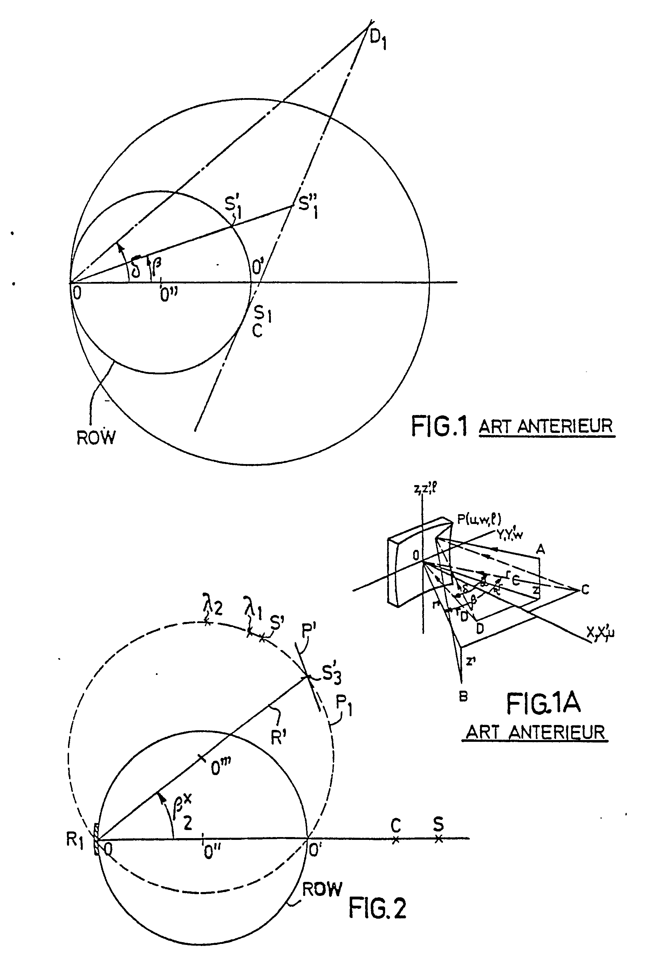

Dans l'article intitulé Imaging Properties of Ruled and Holographic Gratings de Michel POUEY dans Journal of the Spectroscopical Society, vol. 23, Supplement n° 1, 1974, on a décrit le diagramme du schéma optique en précisant toutes les notations utilisées pour caractériser a) le réseau, b) la position spatiale du point source, c) la position spatiale du point image, d) la position spatiale des points d'enregistrement (cf. figure 1A). En outre, cet article donne l'expression du chemin optique déduit du principe de Fermat et exprimé en fonction des coordonnées pupillaires (w, l).

Le chemin optique F = < AP > + < PB > + mn λ s'exprime par:

$$F = (r+r')\left(1+\frac{z^2}{r^2}\right)^{\frac{1}{2}}$$

$$-w\left[(\sin\alpha+\sin\beta)\left(1+\frac{z^2}{r^2}\right)^{-\frac{1}{2}}\right.$$

$$\left.-\frac{m\lambda}{\lambda_u}(\sin\ddot{u}-\sin\gamma_0)\right]$$

$$-\frac{wl}{R}\frac{z}{r}\left(\frac{\sin\alpha}{e}-\frac{\sin\beta}{e'}\right)$$

$$+\frac{w^2}{4R}\frac{z^2}{r^2}\left[2\frac{\sin^2\alpha}{e}+\frac{2\sin^2\beta}{e'}-(T+T')\right]$$

$$-\frac{l^2}{4R}\frac{z^2}{r^2}\left[\frac{2}{e}+\frac{2}{e'}-S_2+S_2'\right]$$

$$+\frac{w^2l}{2R^2}\frac{z}{r}\left[\frac{T}{e}+\frac{T'}{e'}-\frac{2\sin^2\beta}{e'^2}-\frac{2\sin^2\alpha}{e^2}\right]$$

$$+\frac{w^3}{2R}\left[T+T'+\frac{m\lambda}{\lambda_u}(H-H')\right]$$

$$+\frac{l^2}{2R}\left[S_2+S_2'+\frac{m\lambda}{\lambda_u}(K_2-K_2')\right]$$

$$+\frac{w^2}{2R^2}\left[T\frac{\sin\alpha}{e}+T'\frac{\sin\beta}{e'}\right.$$

$$\left.+\frac{m\lambda}{\lambda_u}(H_{DC}\sin\gamma_c-H_{DD}\sin\ddot{u})\right]$$

$$+ \frac{u^4}{8\,R^2}\left[ S_1 + S_1' + \frac{m\lambda}{\lambda_0}(K_1 - K_1')\right.$$

$$+ \left(\frac{4\sin^2\alpha}{e^2} - \frac{T}{e}\right)T + \left(\frac{1\sin^2\beta}{e'^2} - \frac{T'}{e'}\right)T'$$

$$+ \frac{m\lambda}{\lambda_0}\{H(4\,\mu_i\sin^2\eta_i - \rho_\eta H)$$

$$\left. - H''(4\,\rho_i\sin^2 n - \rho_n H')\}\right|$$

$$+ \frac{u^2 l^2}{4\,R^2}\left[\frac{S_1 + S_1'}{l} + \frac{2\sin^2\alpha}{e^2}S_1 - \frac{2\sin^2\beta}{e'^2}S_1'\right.$$

$$- \frac{TS_2}{e} - \frac{T'S_2'}{e'}$$

$$+ \frac{m\lambda}{\lambda_0}\left[\frac{K_1 - K_1'}{l} + 2\,K_{2\mu_i}\sin^2\eta_i\right.$$

$$- 2\,K_{2\mu_i}'\sin^2 n - HK_{2\mu}$$

$$\left.\left.+ H'K_{2\mu}'\right]\right]$$

$$+ \frac{u\,l^2}{2\,R^2}\left[S_2\frac{\sin\alpha}{e} + S_2'\frac{\sin\beta}{e'}\right.$$

$$\left. - \frac{m\lambda}{\lambda_0}(K_{2\mu_i}\sin\eta_i - K_{2\mu_0}'\sin n)\right]$$

$$+ \frac{l^2}{3\,R^2}\left[S_2\left(1 - \frac{S_2}{e}\right) + S_2'\left(1 - \frac{S_2'}{e'}\right)\right.$$

$$\left. + \frac{m\lambda}{\lambda_0}(K_2(1 - K_{2\mu_i}) - K_2'(1 - K_2'))\right]$$

$$+ \cdots S.\,u.\,h.\,O.$$

(équation 1) dans laquelle:

$$r = Rr, \quad r' = Rc', \quad \rho = tR.$$

$$u = R_\tau r_\tau, \qquad \rho_0 = R'r_0.$$

$$T = (\cos n \cdot e) - \cos\alpha, \quad T' = (\cos\beta \cdot e') - \cos\beta.$$

$$S_1 = (1/e) - \cos\alpha \qquad S_1' = (1/e') - \cos\beta.$$

$$S_2 = (1/u) - (\cos\alpha \cdot l), \quad S_2' = (1/e') - (\cos\beta \cdot l).$$

$$H = \rho\cos^2\eta - \cos\eta, \qquad H' = \rho_0\cos^2 n - \cos n.$$

$$K_1 = \rho_e - \cos\eta, \qquad K_1' = u_n - \cos n.$$

$$K_2 = \rho_e - (\cos\eta \cdot l), \qquad K_2' = u_0 - (\cos n \cdot l).$$

$$w = 2w; \qquad L = 2\ell$$

Le chemin optique aberrant $\Delta\,(w, l) = F_0 - F$ (équation 2) est considéré suivant l'invention comme la somme de deux termes $\Delta_1\,(w, l)$ et $\Delta_2\,(w, l)$ caractérisant respectivement le chemin optique aberrant dans l'espace objet et celui dans l'espace image.

Le concept fondamental utilisé par l'inventeur peut donc se formuler de la manière suivante: si le montage est stigmatique cela signifie que $\Delta_1$ (w, I) et $\Delta_2$ (w, I) peuvent s'exprimer par:

[2a] $\Delta_1$ (w, I) = A (w, I, R, V) $\varphi_1$ (e, $\alpha$, $\rho_c$, $\eta$)
[2b] $\Delta_2$ (w, I) = B (w, I, R, V') $\varphi_2$(e', $\beta$, $\rho$, $\delta$)

A et B sont des fonctions dépendant uniquement des coordonnées pupillaires, du rayon de courbure R et d'une constante V ou V' dépendant des caractéristiques de l'hologramme. Annuler les fonctions $\varphi_1$ et $\varphi_2$ revient alors à rendre le chemin optique stationnaire quelle que soit l'ouverture. On rappelle que dans les théories généralement admises, les valeurs de $\Delta$ sont exprimées en fonction des coordonnées pupillaires et des coefficients aberrants, c'est-à-dire par:

[2c] $\Delta_1$ (w, I) = $\Sigma$ $C_1$ij $w^{i|j}$
[2d] $\Delta_2$ (w, I) = $\Sigma$ $C_2$ij $w^{i|j}$

les valeurs de Cij dépendent de différentes fonctions de e, e', $\alpha$, $\beta$, $\eta$, $\delta$, $\rho_D$ et $\rho_c$.

Dans le cas présent, les fonctions $\varphi_1$ et $\varphi_2$ ne dépendent que des positions des points objet et image.

Pour que $\Delta_1$ (w, I) et $\Delta_2$ (w, I) puissent se mettre sous la forme décrite dans les équations 1 et 2, il suffit et cela constitue le fondement de l'invention, d'imposer une condition spécifique entre la position du point source (S) et l'un des points d'enregistrement (C) et entre la position du point image (S') et le second point d'enregistrement (D). Ces conditions sont:

[3a] $\frac{\sin \alpha}{e} = \rho_c \sin \eta = V$ (équation A)
[3b] $\frac{\sin \beta}{e} = \rho_\eta \sin \delta = V'$ (équation B)

On considèrera dans la suite deux cas:
- <u>Cas 1</u>: Séparation totale des espaces objets et images.
[4a] V $\neq$ V' sin $\alpha$ = - P sin $\eta$
[4b] sin $\beta$ = P sin $\delta$

- <u>Cas 2</u>: Non séparation des espaces objets et images.
V = V' = $\frac{1}{a}$ (équation 3)
sin $\alpha$ + sin $\beta$ = $\rho$ $\eta$ $\lambda_o$ (équation 4)

On considère tout d'abord le cas n° 1 V $\neq$ V'.

En utilisant les notations de l'article cite ci-dessus, on va maintenant expliquer l'invention en référence aux dessins annexés en considérant tout d'abord le cas particulier de l'emploi d'un reseau concave avec le point objet (fente d'entrée) situé sur la normale au réseau (angle d'incidence $\alpha$ nul) (figure 2) et en rappelant l'art antérieur (figure 1).

Dans les montages selon la présente invention travaillant sous incidence nulle (figure 2) l'équation fondamentale est:

sin $\beta$ = mn $\lambda$ = Pn $\lambda_o$; P = $\frac{m\lambda}{\lambda_o}$
sin $\delta$ - sin $\eta$ = n $\lambda_o$ (équation 5)

$\lambda_o$ étant la longueur d'onde du laser utilisé pour réaliser l'hologramme et ayant pour valeur communément admise 487,986 nm.

Dans l'art antérieur, en considérant un réseau classique de type I à traits équidistants et parallèles, la source $S_1$ est située en C ($\alpha$ = 0, e = 1, r = R) centre de courbure du réseau (figure 1), l'image se forme en $S'_1$ sur le cercle de Rowland de diamètre R. La focalisation dans le plan horizontal est satisfaite (équation des focales tangentielles T + T' = 0 avec T = 0 et T' = 0, termes en $W^2$ du chemin optique). Le terme de coma en $W^3$ est nul mais l'astigmatisme et la coma en $L^2$ ne peuvent être simultanément annulés que le réseau soit sphérique ou torique (r' = Re' = R cos $\beta$ cf. J.A.R. Sampson, Techniques of Vacuum Ultraviolet Spectroscopy (Wiley, New York, 1967) et M. Pouey, Journal of the Spectroscopical Society, Vol. 23, n° 1, 1974, pages 67-81).

Avec un réseau holographique à distribution de traits non uniforme et à montage sur le cercle de Rowland, pour que la focalisation sur le cercle de Rowland et que la coma en $W^3$ soit nulle, il faut que H = H' = 0, c'est-à-dire que:

$\rho_c = \frac{1}{\cos \eta}$; $\rho_D = \frac{1}{\cos \delta}$ (équation 6)

Pour un réseau sphérique et si l'un des points d'enregistrement C est au centre de courbure ($\eta$ = 0, $\rho_c$ = 1, l'astigmatisme sera caractérisé par:

$AL^2$ $\alpha$ ($\frac{\sin^2 \mu}{\cos \mu}$ - P $\frac{\sin^2 \delta}{\cos \delta}$) $L^2$ (équation 7)

et la coma en $L^2$ W par

$$BL^2 \ W \ \alpha \ (\tfrac{\sin^2 \beta}{\cos \beta} \ \text{tg} \ \beta - P \cdot \text{tg} \ \delta \ \tfrac{\sin^2 \delta}{\cos \delta}) \ L^2 \ W \ (\text{équation 7a})$$

La réponse percussionnelle ne sera symétrique que si $\beta = \delta$, c'est-à-dire pour $\lambda = \lambda_o$ ou pour $m\lambda = \lambda_o$, tous les termes aberrants du 4ème ordre étant non nuls, le chemin optique aberrant $\Delta$ (w, l) étant egal à F (w, l) - F(o).

L'art antérieur décrit une solution stigmatique (brevet FR-A-20 98 665 et son certificat d'addition FR-A-22 40 445) telle que le point source $S_1$ et l'un des points d'enregistrement C étant au centre de courbure du réseau o', le point stigmatique image (toutes les aberrations étant nulles) est en $S''_1$ (figure 1) avec

$$r''_1 = Pr_D \ (\text{équation 8})$$

Le 2ème point d'enregistrement D situe en $D_1$ étant caractérisé par l'angle $\delta$ tel que $\sin \delta = n \lambda_o$ et par

$$r_D = \tfrac{\beta}{\beta} \cdot [P \cos \delta + \sqrt{1 - P^2 \cos^2 \delta}] \ (\text{équation 8'})$$

(cf. encore la figure 1).

Conformément aux concepts connus, pour réaliser un spectromètre (ou un monochromateur), on satisfait tout d'abord à la condition de focalisation dans le plan horizontal en considérant que la somme des focales tangentielles objet et image doit être nulle; on en déduit, pour une position du point source, une position de l'image et une condition sur la localisation des points d'enregistrement (cf. encore J.A.R. Sampson, Techniques of Vacuum Ultraviolet Spectroscopy (Wiley, New York, 1967) et M. Pouey Journal of the Spectroscopical Society, Vol. 23, Supplément n° 1, 1974, pages 67-81). On est donc conduit à déterminer les conditions dans lesquelles on peut amener la focale sagittale (focalisation dans le plan vertical) à coïncider avec la focale tangentielle, ce qui impose une seconde condition pour la focalisation des points d'enregistrement. Avec celle relative à la valeur de n, il ne reste qu'une relation permettant, à la rigueur, de corriger un des termes de coma (cf. M.Pouey article précité).

Dans la présente invention, on considère ici de façon distincte l'espace objet et l'espace image (termes du chemin optique affectés de l'exposant prime dans l'équation 1) et on impose comme distance image celle déduite des équations de la focale sagittale; on a donc à déterminer les conditions dans lesquelles on peut amener la focale tangentielle à coïncider avec la focale sagittale.

On considère donc dans le cas présent (réseau sphérique concave) le cas où la source S et le point d'enregistrement C sont sur la normale du réseau ($\alpha = \eta = o$) (figure 2).

Considérons tout d'abord l'espace image:

Pour une longueur d'onde quelconque $\lambda$ et une valeur de n, d'après l'équation 2, $\beta$ et $\delta$ sont fixés; conformément à la presente invention, selon le processus décrit ci-dessus, on caractérise la distance image par:

$$r'_2 = R \ [\text{cotg} \ \delta \ \sin \beta + \cos \beta] \ (\text{équation 9})$$

le second point source D étant caractérisé par $\delta$ et par:

$$r_D = r'_2/P \ (\text{équation 9'})$$

Le lieu des images corrigées de l'astigmatisme et de la coma est donc un cercle $P_1$ de rayon $R' = R/(2 \sin \delta) = R/(2 \cos \beta_o)$ centré en $0'''$ sur le rayon diffracté et passant par le sommet 0 du réseau $R_1$ et son centre de courbure o' (figure 2), la distance image maximale étant égale à $R/\cos \beta_o$ (avec $\sin \beta_o = \cos \delta$, $\cos \beta_o = \sin \delta$).

On considère maintenant l'espace objet.

La position du point source $S(\alpha = o)$ peut être choisie arbitrairement le long de la normale au réseau $R_1(r = Re)$, la position du point d'enregistrement C étant alors caractérisée par $\eta = o$ et par $\rho_c = R/r_c$ tel que:

$$\tfrac{1}{e} = 1 - P \ (\rho_c - 1) \ (\text{équation 10})$$

Dans ce cas, d'après le critère de qualité d'image valable pour les fortes aberrations (aberrations du 4ème ordre, $> \lambda$) la résolution limite $< \Delta \lambda >$ sera donnée par:

$$\tfrac{mn < \Delta \lambda >}{\cos \beta} = 5,18 \ 10^{-2} \ \tfrac{W^3}{R^3} \ PH^2 \ (\tfrac{P}{e} + + \rho_c) \ (\text{équation 11})$$

(cf. M. Pouey, J. Opt. Soc. Am., 64 (1974) 1616 et brevets FR-A-21 24 199 et 21 80 574).

Toutefois, dans cette configuration toutes les aberrations du 4ème ordre étant proportionnelles à $H^2 \ (\tfrac{P}{e} + \rho_c)$, elles sont nulles pour $H = 0$ qui correspond au point stigmatique déjà connu (brevet FR 70 27 186) et son certificat d'addition 73 28 625) (S en O') mais aussi pour

$$r_c = -\tfrac{P}{P}; \ r = R \ (1 - P); \ P \neq + 1 \ (\text{équation 12})$$

Cette condition est particulièrement intéressante car elle est valable pour toutes les longueurs d'ondes.

Il est donc clair que si l'image est située sur le cercle de rayon $R' = R/(2 \sin \delta)$ si le point objet est localise de façon à satisfaire l'équation 12, l'objectif dispersif constitué par le réseau précédemment défini sera parfaitement stigmatique.

Par ailleurs, il est clair que le point image S' peut être utilisé comme point source, l'image se formant alors en S sur la normale au réseau.

Pour certains diagnostics des plasmas, il est important d'observer un intervalle spectral de plusieurs dizaines d'angströms.

Pour un réseau holographique donné, il existe d'après ce qui précède, une longueur d'onde $\lambda_1 (\beta = \beta_1)$ correspondant soit à une image stigmatique, soit à une image corrigée des comas et de l'astigmatisme à laquelle est associée une valeur de $\delta$. Pour des longueurs d'onde voisines de $\lambda$ $(\beta = \beta_1 + \Delta \beta)$ la loi de focalisation dans le plan horizontal sera:

$$\frac{\cos^2 \beta}{e} - \cos \beta + \sin \beta \sin \delta \cos \delta = 0 \text{ (équation 13)}$$

la distance image $r' = Re'$ étant fonction de $\beta$, a priori, non situé sur le cercle P1. Dans le cas général, le lieu de focalisation est une surface courbe assimilable, pour des faibles valeurs de $\Delta \beta$, à un arc de cercle.

Toutefois, pour toutes les longueurs d'onde voisines de $\lambda^x$, telles que $\beta^x_1 \cong = 32°9$, c'est-à-dire telles que

$$mn \lambda^x_1 = \sin \beta^x_1 = \cos \delta_1 = 0{,}5432 \text{ (équation 14)}$$

les variations, en fonction de $\Delta \beta$, de la courbure du lieu de focalisation sont nulles, ce dernier étant un cercle de rayon 1,208 R dont la tangente en $S'_2$ fait un angle d'environ 80°52 avec la direction du rayon diffracté, la distance image $r' = OS'_2$ étant déduite de l'équation (9).

Pour toutes les longueurs d'onde voisines de $\lambda^x_2$ telles que $\beta^x_2 \cong 37°425$, c'est-à-dire telles que

$$mn \lambda^x_2 = \sin \beta^x_2 = \cos \delta_2 = 0{,}6077 \text{ (équation 15)}$$

le lieu de focalisation est un plan P' faisant un angle d'environ 73°8 avec la direction du rayon diffracté, la distance image étant de

$$r' = R \cos \beta_2^{-1} = R \sin \delta_2^{-1} \cong 1{,}26 R \text{ (voir fig. 2)}$$

Des solutions valables uniquement pour l'incidence rasante ($\lambda < 50$ nm) et non pas comme dans la présente invention en incidence normale et basée sur un autre mode de mise en oeuvre ont été proposées par Jobin et Yvon (cf. VI International Conference on Vacuum Ultraviolet Radiation Physics June 2-6 1980. University of Virginia Charlottesville Virginia USA III-21).

Dans les ordres négatifs, pour toutes les longueurs d'onde voisines de $\lambda^x_3$ telles que

$$tg \beta^x_3 = -\sin \delta (\sin \delta + \cos \delta) \text{ (équation 16)}$$

et pour $\delta > 45°$ ($r > o$), le lieu de focalisation est un cercle centre en 0'' centre du cercle de Rowland et de rayon:

$$R_c = \frac{R}{2} \left[\frac{\sin \delta + \cos \delta}{\sin \delta}\right] \text{ (équation 17)}$$

Par exemple pour $\delta = 77°4145$ $n = 2$ traits/$\mu$m, $\beta^x_3 \cong -49°36$, $m = -1$ ($\lambda^x_3 \cong 379{,}4$ nm), $R_c \cong 0{,}568 R$, $r = 0{,}48185 R$.

On va maintenant considérer l'obtention d'objectifs à forts grossissements pour l'ultraviolet proche et lointain selon la présente invention.

Pour tout dispositif optique, la résolution limite est imposée par la diffraction, donc par longueur d'onde à laquelle on peut réaliser des objectifs parfaitement corrigés.

Dans la présente invention on va décrire, à titre d'exemple non limitatif, un dispositif stigmatique pouvant travailler à 121,6 nm (Ly $\alpha$) longueur d'onde à laquelle existe des sources intenses stables et reproductibles.

Les applications pratiques d'un tel dispositif sont très nombreuses, à titre d'exemple, on peut citer la reproduction de masques utilisés pour la réalisation de microcircuits semiconducteurs VLSI.

Selon la présente invention on considère:

- un réseau fixe dont l'angle de miroitement sera optimisé, par tous moyens connus, pour le fonctionnement dans l'ordre m et recouvert de couches réfléchissantes appropriées ($Al + MgF_2$ par exemple);

- un objet, éclairé par une source monochromatique, situé perpendiculairement à la normale au réseau et situé à une distance r du sommet du réseau;

- un détecteur plan situé à une distance r' du sommet du réseau, l'angle de diffraction $\beta_4 = -\beta^x$ correspondant à un fonctionnement dans les ordres négatifs.

La distance objet sera d'après l'équation (9):

$$r = R \left[\frac{\sin \delta + \sin \beta^x}{\sin \delta}\right] \text{ (équation 18)}$$

et la distance image

$$r' = R [\cos \beta^x - \cotg \delta \sin \beta^x] \text{ (équation 19)}$$

Le grandissement étant égal à:

$$\Gamma = \frac{r'}{r} = \frac{\sin (\delta - \beta^x)}{\sin \delta + \sin \beta^x} \text{ (équation 20)}$$

Pour $\beta_4 = -\beta^x = -50°$, $\delta = 50°2$, $r \sim 4{,}510^{-3} R$ $r \sim 2R$ et $\Gamma \sim 1/444 \sim 2{,}25 \cdot 10^{-3}$.

Si les points d'enregistrement sont:

$C [\eta = 0 \; r_c \cong 20 R]$
$D [\delta = 50°2 \;\; r_d \cong 4{,}5 \cdot 10^{-2} R]$

Le dispositif sera strictement stigmatique pour toutes les longueurs d'onde telles que m $\lambda \cong -0{,}48656$ μm, c'est-à-dire pour Ly α (121,6 nm) dans le quatrième ordre négatif. La résolution limite du dispositif sera imposée par la diffraction, c'est-à-dire par $0{,}85 \left(\frac{R}{W}\right)$ μm, autrement dit des fractions de microns pour des ouvertures de f/25. Compte tenu des valeurs de r', il est nécessaire de travailler avec des valeurs élevées de R, la distance objet étant alors grande. Dans ce cas, on peut replier le faisceau à l'aide de miroirs plans. La résolution limite pratique est donc influencée par la qualité du réseau et des états de surface des miroirs ainsi que par la stabilité mécanique de l'ensemble, problèmes qui sont facilement résolus avec les solutions techniques connues actuellement.

On considère à présent les montages travaillant sous une incidence quelconque. Dans ces conditions:

$$\rho_c \sin \eta = \frac{\sin \alpha}{e} = V = \text{cte} \text{ (équation 3a)}$$
$$\sin \alpha = -P \sin \eta; \; P = \frac{m\lambda}{\lambda_o} \text{ (équation 4a)}$$

et $\Delta_1 (w, l)$ s'exprime:

$$\Delta_1 (w, l) = -\left[\frac{w^2}{2R} + \frac{V}{2R^2} w^3 + \frac{V^2}{2R^3} w^4\right] (T + PH)$$

$$- \left[\frac{l^2}{2R} + \frac{V l^2 w}{2R^2} + \frac{w^2 l^2 (1 + 2V^2)}{4R^3} + \frac{l^4}{8R^3}\right]$$

$$(S_2 + PK_2) + (T^2 - P^2 H^2) \frac{w^4}{8R^3 e}$$

$$+ (TS_2 - P^2 HK^2) \frac{w^2 l^2}{4R^3 e}$$

$$+ (S_2^2 - P^2 K_2^2) \frac{l^4}{8R^3 e} + \dots 5 \text{ a h } 0. \text{ (équation 2e)}$$

Selon ce procédé, la fonction $\varphi_1 (e, \alpha, \rho_c, \eta)$ est représentée dans l'équation 2e par $T + PH$ et $S_2 + PK_2$. Comme d'après les relations 3a et 4a on peut écrire que:

$$T + PH = \frac{\cos^2 \alpha}{e} - \cos \alpha + P [\rho_c \cos^2 \eta - \cos \eta]$$

$$= \frac{1}{e} - \cos \alpha + P [\rho_c - \cos \eta]$$

$$- V [\sin \alpha + P \sin \eta]$$

$$= S_2 + PK_2 \text{ (équation 21)}$$

puisque le coefficient de V est nul d'après l'equation 4a, $\Delta$, (w, l) sera nul si $S_2 + PK_2$ ou $T + PH$ est nul.

L'expression des focales sagittales et tangentielles est donc unique: il y a donc stigmatisme; le lieu des images peut être considéré comme celui qui serait deduit, d'après les théories classiques, de celui de l'expression particulière de focale sagittale, c'est-à-dire de:

$$\frac{1}{e} - \cos \alpha + P [\rho_c - \cos \eta] \text{ (équation 21a)}$$

En pratique, dans l'équation 21a, on doit aussi tenir compte de la valeur de $\rho_c = -P/e$ déduite des relations 3a et 4a, le lieu des points objets étant donne par

$$r = R \; e = R [\sin \alpha \cotg \eta + \cos \alpha] \text{ (équation 21b-Cercle P'}_1)$$

Le lieu des points objets, pour l'obtention d'une image strictement stigmatique est donc un cercle $P'_1$ de rayon $R/(|2 \sin \eta|)$ centré dans la direction $\pm \sin \alpha_o = \cos \eta$ passant par le sommet du réseau et son centre de

courbure, avec $|\sin \eta| = \cos \alpha_0$.

Dans le cas particulier, déjà décrit plus haut, de l'incidence normale ($\alpha = \eta = 0$) il existe plusieurs solutions:
- le point objet A et l'un des points d'enregistrement C sont au centre de courbure:

$$r = R \quad e = R; \quad e = 1; \quad \alpha = 0$$

$$r_c = = \tfrac{R}{\rho_c}; \quad \rho_c = 1; \quad \eta = 0$$

- le point objet A est défini par:

$$\alpha = 0; \quad r = R \quad e = R \, (1 - P)$$

Le point d'enregistrement C est tel que:

$$\eta = 0; \quad \rho_c = -\tfrac{P}{e} = \tfrac{P}{P-1}; \quad r_c = \tfrac{R}{\rho_c}$$

Pour toute autre position du point objet sur la normale du réseau, il subsistera de l'aberration sphérique dont l'influence sur la qualité de l'image va dépendre de l'ouverture (cf. critère de qualité d'images cité dans M. Pouey, J. Opt. Soc. Am. <u>64</u> (1974), p. 1616).

$$\text{Si } \Delta \, (w, \, l) = C_{o4}^4 + C_{22} \, w^2 \, l^2 + C_4 l^4$$

$$= \tfrac{A}{8R^3} \, w^4 + \tfrac{2A \, w^2 l^2}{8R^3} + \tfrac{A l^4}{8R^3} \leqslant \lambda \quad \text{(équation 2f)}$$

Une image limitée par la diffraction sera obtenue d'après le critère de STREHL modifié si la largeur $W^*$ du réseau et sa hauteur $L^R = \rho \, W^x$ sont telles que:

$$\tfrac{180 \lambda^2}{\Pi^2} \geqslant \tfrac{W^8}{64 R^6} A^2 \left[ 1 + \tfrac{10}{7} \rho^2 + 4 \rho^4 \right] \quad \text{(équation 22)}$$

avec $A = P \, H^2 \left[ \tfrac{P}{e} + \rho_c \right]$

Dans le cas des fortes aberrations $\Delta > \lambda$, la qualité de l'une sera définie par:

$$mn < \Delta \lambda > = A_1 \, \tfrac{W^3}{8R^3} \sqrt{B} \, (\rho) \quad \text{(équation 23)}$$

avec $W > W^x$ et $B \, (\rho) = \tfrac{1}{7} + \tfrac{2 \rho^2}{15} + \tfrac{\rho^4}{60} < \Delta \lambda >$ étant la valeur quadratique moyenne de la largeur à mi-hauteur de la réponse percussionnelle.

Dans l'espace image, le lieu des images est le cercle de rayon $R/(2 \sin \delta)$ précédemment décrit.

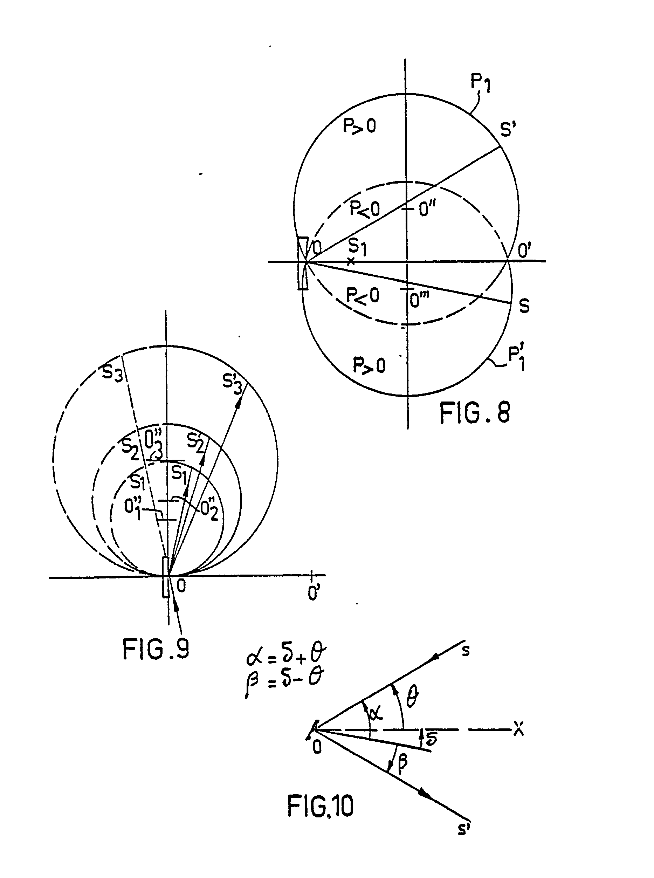

La figure 8 illustre un schéma pour une valeur précise de $\eta$ et de $\delta$ et pour un angle d'incidence $\alpha \neq 0$.

**Cas d'un point source hors du plan médian**

Si z est la cote du point objet ($z' = \tfrac{r'}{r} z$ celle du point image associé) et $\theta_V = 2\tfrac{z}{r}$ le champ vertical correspondant, la principale aberration est caractérisée par:

$$C_{12} w^2 l = - \tfrac{w^2}{2R^2} \, \theta_V \left[ \tfrac{T}{e} + \tfrac{T'}{e'} - \tfrac{2 \sin^2 \beta}{e'^2} - \tfrac{2 \sin^2 \alpha}{e^2} \right]$$

$$= \tfrac{w^2 l}{2R^2} \, \theta_V \left[ y'^2 \, (2 + \cotg \beta \, \cotg \delta) + y^2 \, (2 + \cotg \alpha \, \cotg \eta) \right] \quad \text{(équation 24)}$$

On aura donc intérêt à travailler dans les ordres négatifs et si l'objet est soit à l'infini, soit au centre de courbure, $C_{12}$ peut être annulé si $\cotg \beta_0 = - 2 \, tg \, \delta$

**Grandissements**

Ces objectifs holographiques dispersifs, travaillant à une longueur d'onde, ont des propriétés d'anamorphose résultant de l'effet unidirectionnel de la diffraction par les traits. En effet, dans le plan vertical le grandissement a pour valeur $g_y = r'/r = e'/e$, mais dans le plan horizontal il s'exprime par

$$g_x = \tfrac{dx'}{dx} - \tfrac{e' \cos \alpha}{e \cos \beta} \quad \text{(équation 25)}$$

**Cas d'un objet à l'infini** $(V \neq V')$

Dans ce qui suit, on considère que l'image se forme sur le cercle de rayon $R/2 \sin \delta$. Si l'objet est situé à l'infini, $\eta$ et $\alpha$ doivent aussi être nuls d'après les relations A et C. Tous les termes aberrants d'ordre 2 et 3 seront donc nuls si:

$r_c = R P (P + 1)^{-1}$; $\eta = 0$ (équation 26)
$e = \infty$; $\alpha = 0$

Les seuls termes aberrants sont alors ceux du quatrième ordre:

$\Delta_1 (w, l) = \left(\frac{(w^2 + l^2)^2}{8R^3}\right) \left(\frac{P + 1}{P^2}\right)$ (équation 2-g)

ils sont nuls pour $P = -1$. Pour une valeur quelconque de $\beta$ la tolérance sur l'ouverture sera donnée par le critère de STREHL modifié. Pour n'être limité que par la diffraction, il faudra satisfaire, si $\Omega = W/R$, à

$\lambda \geqslant 0{,}558 \left(\frac{P + 1}{P^2}\right) \Omega^3 W$ (équation 27)

la résolution limite dans l'espace image étant donnée par:

$\Delta X' = 0{,}6975 \left(\frac{P + 1}{P^2}\right) \Omega^2 (1 + \text{tg } \beta \text{ cotg } \delta) W$ (équation 28)

Les applications d'un tel dispositif sont nombreuses - écriture laser, réalisation de masques pour la microlithographie, etc.
Pour un laser à Argon ionisé $(\lambda = 363{,}8$ nm, $W = L = 1{,}6$ mm) en travaillant dans l'ordre $m = -1$ $(\delta = 65°287$, $\beta = -42°6279)$ et une distance image $r' = 0{,}424089$ R, $\Omega$ a pour valeur limite $0{,}09619$ et donc pour $R \geqslant 16{,}6$ mm:

$\Delta X' \geqslant \ddot{W} = 0{,}09643$ R $\geqslant 1{,}6$ µm (équation 29)

On considèrera maintenant dans tout ce qui suit le cas n° 2 pour lequel $V = V' = \frac{1}{a}$ (équation 3) Le chemin optique aberrant s'exprime alors par (équation 2-h):

$\Delta (w, l) = - \left[\frac{w^2}{2R} + \frac{1}{a} \frac{w^3}{2R^2} + \frac{1}{a^2} \frac{w^4}{2R^3}\right] \bar{T}$

$- \left[\frac{l^2}{2R} + \frac{1}{a} \frac{l^2 w}{2R^2} + \frac{w^2 l^2}{4R^3} (1 + \frac{2}{a}) + \frac{l^4}{8R^3}\right] \bar{S}$

$+ \left[\frac{T^2}{e} + P\rho_c H^2 + \frac{T'^2}{e'} - P \rho_D H'2\right] \frac{w^4}{8R^3}$

$+ \left[\frac{TS2}{e} + PS_2 \rho_C + \frac{T'S'2}{e'} - PH'K'_2\rho_D\right] \frac{w^2 l^2}{4R^3}$

$+ \left[\frac{S2^2}{e} + PK_2^2 \rho_C + \frac{S'2^2}{e'} - PK'_2^2 \rho_D\right] \frac{l^4}{8R^3} + \ldots$ 5,a,h,0,

avec d'après les équations (3 et 4)

$\bar{T} = \bar{S} = S_2 + S'_2 + P (K_2 - K'_2)$

Si l'on considère dans la présente application le cas le plus général dans lequel l'angle d'incidence sur le réseau est différent de zéro, d'après les resultats précédents, le lieu des images corrigées de l'astigmatisme et de la coma est déterminé par l'équation de la focale sagittale $(\bar{S} = 0)$:

$\frac{1}{e} - \cos \alpha + \frac{1}{e'} - \cos \beta + (\Omega - R) (K_2 - K'_2) = 0$ (équation 30)

avec $\sin \alpha = \Omega n \lambda_o$; $\sin \beta = = -R n \lambda_o$ (équation 31)

$P = \frac{m\lambda}{\lambda_o} = \frac{\sin \alpha + \sin \beta}{n \lambda_o} = \Omega - R$ (équation 31')

$\rho_c \sin \eta = \frac{\sin \alpha}{e} = \rho_D \sin \delta = \frac{\sin \beta}{e'} = \frac{1}{a}$ (équation 3) déjà décrite

L'équation 30 caractérise le procédé de focalisation généralisée selon la présente invention. Pour montrer les applications de ce procédé, on examine ci-après, à titre non limitatif, quelques cas concrets particuliers:

A) Cas particulier n° 1; $\delta = -\eta$, $n \lambda_o = 2 \sin \delta$

L'équation 30 s'écrit alors

$\frac{1}{e} [1 - \frac{2 \sin^2 \alpha}{n^2 \lambda^2_0} - \frac{2 \sin \alpha \sin \beta}{n^2 \lambda^2_0}]$ - cos $\alpha$

$+ \frac{1}{e'} [1 - \frac{2 \sin^2 \beta}{n^2 \lambda^2_0} - \frac{2 \sin \alpha \sin \beta}{n^2 \lambda^2_0}]$ - cos $\beta$ = 0 (équation 30')

On considèrera maintenant le cas d'un objet à distance finie: soit $\Gamma$ le grandissement tel que:

$\frac{e'}{e} = - \Gamma$ (équation 32)

il faudra donc satisfaire à:

$+ \frac{1}{e} [\frac{\Gamma-1}{\Gamma} - \frac{4 \sin \alpha \, mn \lambda}{n^2 \lambda^2_0}] = $ cos $\alpha$ + cos $\beta$ (équation 33)

avec mn $\lambda = $ sin $\alpha$ + sin $\beta = $ sin $\alpha$ (1 - $\Gamma$) (équation 34)

c'est-à-dire à:

$\frac{\Gamma^2-1}{\Gamma e} = $ cos $\alpha$ + cos $\beta$ (équation 35)

avec $n^2 \lambda^2_0 = 4 \sin^2 \alpha$ (équation 36)

Pour un angle d'incidence donné, le pas du réseau est fixé et pour chaque longueur d'onde correspond un angle de diffraction $\beta$ auquel est associée une distance image déduite de la valeur de $\Gamma$ satisfaisant l'équation 35.

A titre d'exemple, si l'angle de diffraction $\beta = - 2 \alpha$, la valeur de $\Gamma$ est de 2 cos $\alpha$, la distance objet étant donné par:

re $= \frac{R [4 \cos^2 \alpha - 1]}{2 \cos \alpha (\cos \alpha + 2 \cos^2 \alpha - 1)}$ (équation 37)

et la distance image:

r' = R e' = - 2 cos $\alpha$ e R (équation 38)

Pour $\alpha = 30°$, $\cong 0,8453$, $\beta = -60°$ et n = 1,4315 trait/µm le montage est stigmatique pour $\lambda = 255,6$ nm dans l'ordre m = -1.

Pour $\Gamma = - 1$, c'est-à-dire dans le cas d'un montage type Littrow ($\theta = \alpha = -\beta$) travaillant à grandissement un (source et image superposées dans l'espace), l'équation 30' s'écrit:

$\frac{2}{e} [1 - \frac{m^2 n^2 \lambda^2}{n^2 \lambda^2_0}] = $ cos $\alpha$ + cos $\beta = 2$ cos $\theta$ (équation 39)

si n $\lambda_0 = 2$, e = cos $\theta$. On retrouve alors une configuration du type Rowland stigmatique dans laquelle on peut travailler hors du plan. Avec un réseau de 1 mètre et une ouverture de f/10, pour $\theta = 30°$, le déplacement du point source hors du plan, dans la direction verticale parallèle aux traits de 7 mm n'introduit qu'une différence de fonctionnement de une longueur d'onde. La fente d'entrée peut donc être située à un centimètre au-dessus du plan du cercle de Rowland, le détecteur étant situé en dessous de ce dernier.

B) Cas particulier n° 2; $\delta - \eta = 2 \alpha$

Pour $\delta$ et $\eta$ quelconque l'équation 19 s'écrit:

$\frac{F(\alpha)}{e} + G (\alpha) + \frac{F(\beta)}{e} + G (\beta) = 0$ (équation 40)

les fonctions F et G dépendant de $\delta$ et $\eta$ étant données par:

F $(\alpha) = 1 + \frac{\sin^2 \alpha}{\sin \delta \sin \eta}$ (équation 41)

G $(\alpha) = \frac{2}{n \lambda_0}$ x cos $(\frac{\delta + \eta}{2} - \alpha)$ sin $(\frac{\delta - \eta}{2})$ (équation 42)

L'espace objet et l'espace image peuvent être traités séparément, en effet dans l'espace objet il faudra satisfaire à:

$\frac{1}{e \sin \delta} = \frac{V^2 (1 - t^2) + 2 Vt}{-V^3 + V^2 (1 - 2t^2) + tV (2 - t^2) + t^2}$ (équation 43)

si t = tg $\alpha$ et V = tg $\eta$.

Pour par exemple $tg^2 \alpha = 2 (\alpha = \pm = 57°7356)$ on a $\delta - \eta = 109°947$ pour $\alpha > 0$

e étant positif si $- 45° \leqslant \eta \leqslant 69°89$

Pour $\eta = -65°$, $\delta = 44°47122$; $n = 3,2928$ traits/$\mu$m;

$e = 0,2589$

$\rho_c \sin \eta = 3,15356$; $\rho_c = -3,47957$

$\rho_D = 4,501556$

Les valeurs des distances image et des angles de diffraction sont alors données par l'équation 3 et par:

$$tg \beta = \frac{X_2 - \frac{1}{2}X_2^2 - 4 - 4(X_1 - X_1)}{2(1 + X_3 - X_1)} \text{ (équation 44)}$$

$$X_1 = - \frac{1}{\sin \delta \sin \eta}$$

$$X_2 = \frac{2}{n \lambda_o} \cdot \sin \left(\frac{\delta - \lambda}{2}\right) \cdot \cos \left(\frac{\delta + \eta}{2}\right) \cdot \frac{\sin \alpha}{e}$$

$$X_3 = X_2 tg \left(\frac{\delta + \eta}{2}\right)$$

Ces exemples montrent que pour un point objet et un réseau donné, il existe toujours pour un angle de diffraction approprié une distance image pour laquelle l'image obtenue est corrigée de l'astigmatisme et de la coma. En particulier, on peut obtenir des images à très haute résolution même aux très courtes longueurs d'onde.

Dans l'exemple précédent pour $\beta = -78°98$ $e' = - 0,311249$, la longueur d'onde de stigmatisme est 41,2 nm dans l'ordre $m = - 1$ c'est-à-dire aussi 20,6 nm dans l'ordre $m = - 2$.

On va maintenant considérer les dispositifs spectroscopiques stigmatiques travaillant simultanément dans plusieurs gammes spectrales avec un réseau unique.

Dans la description ci-dessus, on a montré, pour différentes configurations, l'intérêt des concepts pour lesquels les caractéristiques de l'hologramme étaient directement reliées à la longueur d'onde via les angles d'incidence et de diffraction ($r_D = \sin \delta \ r'/\sin \beta$), on considère à présent un réseau holographique sphérique concave (ou convexe) réalisé avec deux points sources C et D dont les proximités sont indépendantes de la longueur d'onde d'utilisation et en particulier le cas:

$$\frac{1}{r_c} = \frac{\rho_c}{R} = \frac{a'}{R \sin \eta}; \ \frac{1}{r_D} = \frac{\rho}{R} = \frac{a'}{R \sin \delta} \text{ (équation 45)}$$

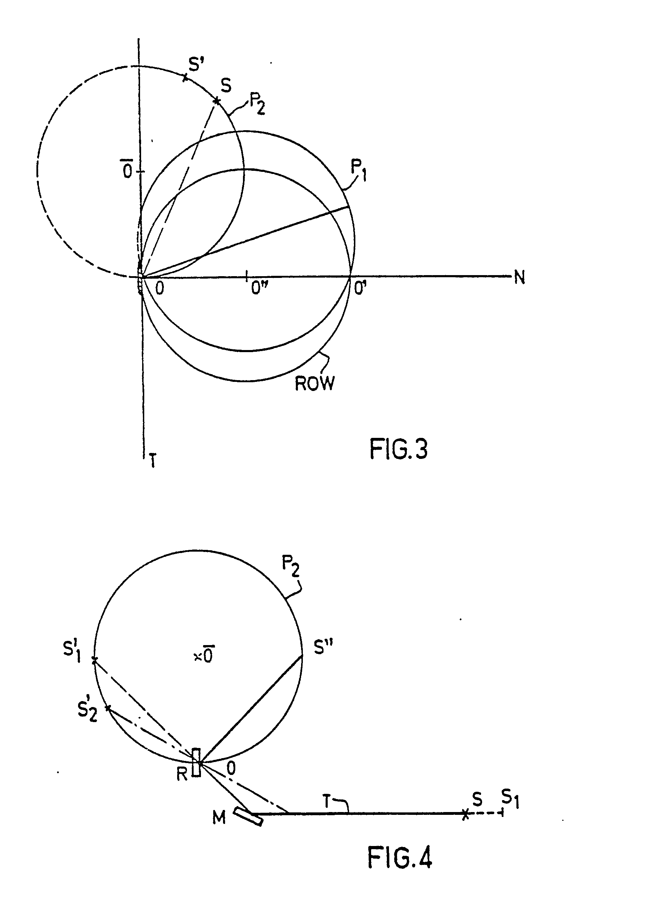

De plus, au lieu de considérer le cercle de Rowland, on positionne la source S et l'image S' sur le cercle de Rayon Ra passant par le sommet 0 du réseau et centré en 0 sur la tangente au sommet du réseau fixe dans l'espace (figure 3) avec par conséquent:

$$r = Re = aR \sin \alpha \text{ (équation 46)}$$

$$r' = Re' = aR \sin \beta \text{ (équation 47)}$$

L'enregistrement de l'hologramme est tel que:

$$r_c = aR \sin \eta \text{ (équation 48)}$$

$$r_D = aR \sin \delta \text{ (équation 49)}$$

La source et l'image sont donc situées sur des cercles de rayon aR (figure 9).

Dans ce qui suit, on va considérer le cas où $a = 1$. Il importe d'observer que a peut prendre n'importe quelle valeur entière ou fractionnaire à l'exception de 0.

On peut montrer que tous les coefficients aberrants caractérisant l'astigmatisme, les comas et le défaut de mise au point (termes en $I^2$, $I^2w$, $w^3$ et $w^2$) sont proportionnels à:

$$\varphi = \varphi_1 + \varphi_2$$

$$= \sin \alpha^{-1} [\cos^2 \alpha - \sin \alpha \cos \alpha + C \sin^2 \alpha]$$

$$+ \sin \beta^{-1} [\cos^2 \beta - \sin \beta \cos \beta + C \sin^2 \beta] \text{ (équation 50)}$$

avec pour $C = \frac{H - H'}{n \lambda_o} < 0$ et $\delta = -\eta$

$$tg \delta = \sqrt{-\frac{1}{C}}; \ 2 \sin \delta = n \lambda_o \text{ (équation 51)}$$

Pour un angle d'incidence donnée $\varphi_1$ est constant et $\varphi_2$ est nul pour toutes les valeurs de $\beta$ telles que:

$$\cos \beta = \sqrt{\frac{C}{C - 1}} \text{ (équation 52)}$$

14

les valeurs de $\alpha$ étant déduites de l'équation:

$$(Ct^2 + 1)\,([c + 1 - c^2]\,t^2 + 2\,[c - 1]\,t - [c\text{-}1]) = 0 \quad \text{(équation 53)}$$

dans laquelle $t = tg\ \alpha/2$.

La réponse percussionnelle est donc symétrique pour les longueurs d'onde $\lambda^x$ telles que:

$\lambda^x = 0$ tache centrale

$\frac{m\lambda^x}{\lambda_o} = \frac{\sin \alpha}{\sin \delta}$; $tg\ \alpha = \pm\ \sqrt{-\frac{1}{c}}$ (autocollimation)

$\frac{m\lambda^x}{\lambda_o} = \frac{\sin \alpha + \sin \beta}{2\sin \delta}$; $tg\ \alpha = \frac{1 - C + \sqrt{C(C-1)(2-C)}}{C + 1\,C^2}$ (équation 54)

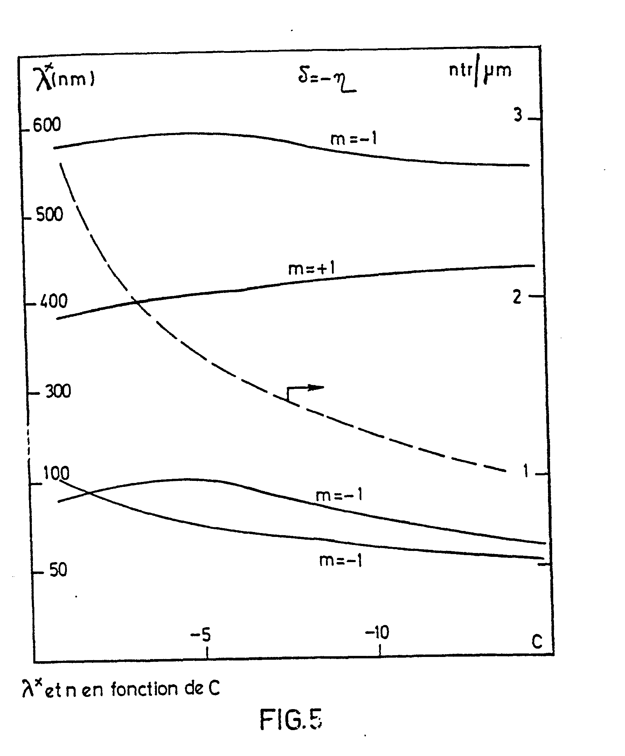

La solution en autocollimation est particulièrement intéressante car le dispositif peut travailler dans des ordres élevés, ce qui augmente le pouvoir de résolution limite. Par exemple, on peut observer dans le 3ème ordre, les raies CV et OVII dont la mesure des élargissements donne des renseignements fondamentaux sur la densité et la température ionique des plasmas. Les autres solutions sont représentées sur la figure 5. Dans l'ordre $m = -1$ et des valeurs élevées de C ($C \cong -15$ par exemple) les termes aberrants du 4ème ordre sont négligeables au sens du critère de Strehl et il existe 2 valeurs de $\alpha$ c'est-à-dire 2 longueurs d'onde voisines pour lesquelles $\varphi = 0$ c'est-à-dire pour lesquelles il y a stigmatisme rigoureux. Le dispositif est donc opérationnel sur un intervalle de plusieurs dizaines d'angströms. La figure 4 donne un exemple de fonctionnement en monochromateur, la source S étant refocalisée à l'aide d'un miroir torique M travaillant au grandissement un. Le miroir torique M donne une image $S'_1$ située sur le cercle $P_2$ laquelle image $S'_1$ joue le rôle d'objet virtuel pour le réseau R qui en donne une image réelle stigmatique $S''$ sur le cercle $P_2$. En déplaçant le miroir M dans la direction du rayon incident MS et en le faisant tourner, on peut redonner de S une deuxième image $S''_2$ située sur le cercle $P_2$ qui servira de second point objet virtuel pour le réseau.

Pour un hologramme donné ($C = -15$), l'équation 50 présente, en outre, des solutions différentes du cas particulier précédent; en effet, si $V = tg\ \beta/2$, l'équation 50 s'écrit:

$$V^4 + 2\,[\varphi_1 + 1]\,V^3 + 2\,[2C - 1]\,V^2 + 2\,[\varphi_1 - 1]\,V + 1 = 0 \quad \text{(équation 55)}$$

Pour toutes les valeurs de $\alpha > 3°$, l'équation 55 a quatre solutions réelles dont deux au minimum sont positives. Pour chaque valeur de $\alpha$, il existe donc pour les ordres positifs, deux valeurs de $\lambda$ pour lesquelles la réponse percussionnelle est symétrique, astigmatisme et comas étant corrigés et les aberrations du 4ème ordre négligeables au sens du critère de Strehl.

Si la source S et le détecteur (placé derrière la fente de sortie localisée en S') peuvent se déplacer sur un cercle de rayon R passant par le sommet 0 du réseau et centré en $\bar{O}$ sur sa tangente, on obtient, pour un réseau donné, toute une série de valeurs de longueurs d'onde pour lesquelles le dispositif est stigmatique dans le cadre de l'approximation du critère de Strehl. Dans le cas des fortes ouvertures et des courtes longueurs d'onde, la qualité de l'image pourra être déduite du critère de qualité d'image géométrique (cf. M. Pouey, Journal of the Spectroscopie Society Am. déjà cité).

On considère ici le cas d'un réseau concave (ou convexe) donnant d'un faisceau venant de l'infini sous un angle $\alpha$ une image réelle (ou virtuelle) située sur l'axe du réseau ($\beta = 0$) les deux points sources étant d'après la condition $V = V'$ situés à l'infini.

Pour un point situé dans le plan horizontal de référence perpendiculaire à la direction verticale des traits, la condition de stigmatisme absolu s'écrit:

$$\frac{1}{e'} = 1 + \cos \alpha + P\,[\cos \eta - \cos \delta] \quad \text{(équation 56)}$$

Si de plus $e' = 1$, c'est-à-dire si $\delta + \eta = \Pi + 2\,\alpha$ (équation 57)

le champ vertical $\theta_V$ utilisable sera élevé car tous les termes aberrants proportionnels à $\theta^i_V = (\frac{x}{2})^i$, $i$ étant impair, seront nuls. La seule aberration d'ordre 2 en $\theta_V$ sera:

$$\Delta\,(w,\,l) = -\frac{W^2}{16R}\,\theta^2_V \cos \alpha \quad \text{(équation 2-i)}$$

Pour être limité par la diffraction il faudra, d'après le critère de Strehl modifié, satisfaire à:

$$\theta^2_V\,W^2 \cos \alpha = 3R\,\lambda \quad \text{(équation 58)}$$

Pour une valeur quadratique moyenne, exprimée en nanomètres, de la réponse percussionnelle $< \Delta\lambda >$ donnée, il faudra satisfaire à:

$$mn\,< \Delta\lambda > = \frac{\theta^2_V \cos \alpha}{16\sqrt{3}\,R}\,W \quad \text{(équation 59)}$$

Si par contre $\eta = 0$, $\rho_c = 1$ et $\rho_D = 0$ avec $\delta \neq 0$ tous les termes aberrants sont nuls si

$$\tfrac{1}{e} = 1 + \cos \alpha - P \cos \delta \text{ (équation 60)}$$

avec $\sin \alpha = P \sin \delta$
c'est-à-dire si

$$r' = R \sin \delta [\sin \delta + \sin (\delta - \alpha)]^{-1} \text{ (équation 61)}$$

Cette solution est particulièrement adaptée au cas de l'incidence rasante $\alpha > > \delta$, l'image obtenue étant réelle pour un réseau convexe.

## Cas d'un objet et d'une image à l'infini $V = V' = 0$

Le miroir holographique concave ou convexe est alors équivalent à un miroir plan ayant des propriétés de sélection spectrale. Actuellement, seuls sont considérés, dans la littérature, des réseaux plans notamment utilisés dans les montages types CZERNY-TURNER. Mais même pour des faisceaux incidents strictement parallèles, ils introduisent, dans la direction de diffraction considérée, des distorsions de surface d'onde générant une forte coma et une courbure de raies spectrales.

D'après la relation 3, on devra satisfaire à:

$$\tfrac{\sin \alpha}{e} = \tfrac{\sin \beta}{e'} = \rho_c \sin \eta = \rho_D \sin \delta = 0 \text{ (équation 62)}$$

c'est-à-dire imposer $\rho_D = \eta = 0$ puisque $e^{-1} = e'^{-1} = 0$.

Si de plus $\rho_c = 1$, la qualité du faisceau diffracté ne sera limitée que par la diffraction et ce, que le miroir holographique soit concave ou convexe, si on satisfait à la condition:

$$- \cos \alpha - \cos \beta + P \cos \delta = 0 \text{ (équation 63)}$$

c'est-à-dire à $\alpha + \beta = 2 \delta$ avec

$$P = \tfrac{m \lambda}{\lambda_o} = 2 \cos \theta \text{ (équation 64)}$$

si comme montre sur la figure 10 $2\theta$ est l'angle entre les faisceaux incidents et diffractés.

Si donc on considère un axe de référence OX, un faisceau incident polychromatique venant de l'infini et incliné d'un angle $\theta$ par rapport à OX, on obtiendra après diffraction, un faisceau monochromatique stigmatique dans la direction $\theta$ symétrique de la précédente pour un ordre m et une longueur d'onde $\lambda$ telle que $m \lambda = 2 \lambda_o \cos \theta$, la normale au miroir holographique faisant un angle $\delta$ avec l'axe OX, angle définissant la position angulaire du point d'enregistrement D situé à l'infini. Le second point d'enregistrement est situé au centre de courbure du miroir.

Compte tenu des performances optiques des montages selon la présente invention, il importe du point de vue de la réalisation mécanique que les éléments essentiels, c'est-à-dire le support de réseau et la ou les fentes soient réalisés avec précision et comportent des possibilités de réglage de sensibilité appropriée.

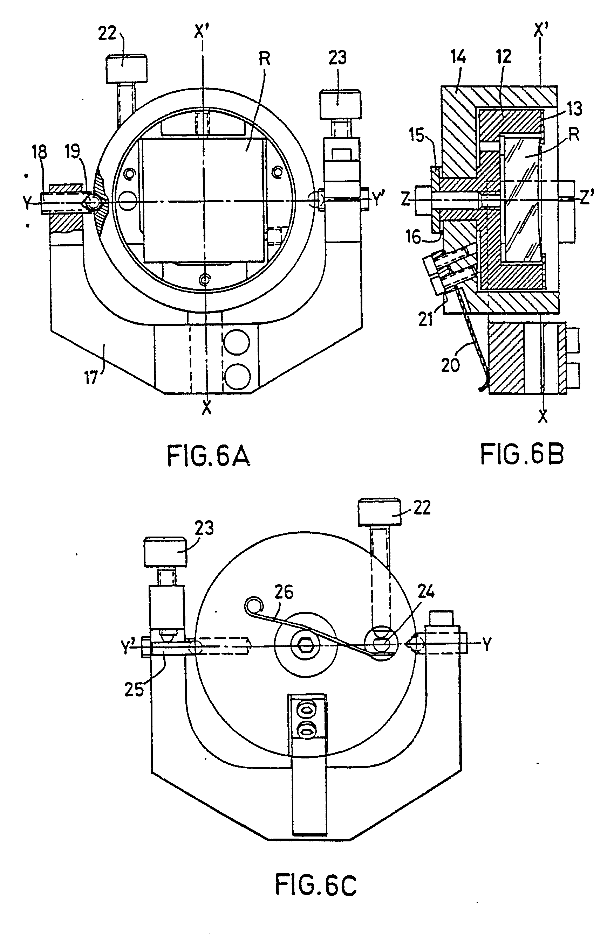

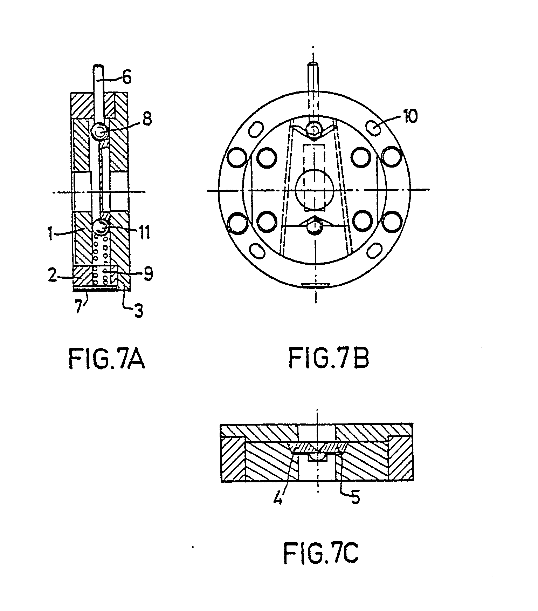

Les figures 6A, 6B, 6C illustrent un support de réseau avec paramètres de réglages indépendants tandis que les figures 7A, 7B, 7C concernent une fente à ouverture symétrique.

Sur les figures 6A, 6B, 6C, XX' est l'axe de rotation du réseau pour le réglage de son orientation par autocollimation. YY' est l'axe de basculement du réseau (le plan tangent au sommet du réseau doit être vertical, la fente d'entrée étant la verticale du lieu et la normale au réseau étant dans le plan horizontal). ZZ' est l'axe de basculement des traits du réseau (le milieu de toutes les images diffractées doit se trouver dans le plan horizontal).

On décrit à présent les figures 6A, 6B, 6C. Le réseau R est logé dans un boîtier 12 et fixé par une plaque 13 percée d'un orifice rectangulaire limitant la surface active de la pupille. Le boîtier 12 est maintenu dans un support 14 par l'intermédiaire d'un tirant comportant un écrou 15 et une lame élastique 16. Un alésage effectué dans le support 14 et une partie cylindrique de l'arrière du boîtier 12 assurent la matérialisation de l'axe ZZ'. La précision de la réalisation mécanique et le réglage de l'épaisseur des trois cales situées dans le fond du boîtier 12 assurent le positionnement du sommet du réseau sur l'axe XX' à quelques centièmes de microns.

La fourche 17 solidaire de la pièce matérialisant l'axe XX' comporte sur sa partie supérieure deux taraudages, ces derniers par l'intermédiaire de vis taillées en V 18 et de billes 19 assurent la matérialisation de l'axe YY'. Le basculement du réseau R est assuré par l'action de deux vis serrant la pièce 21, la lame de ressort 20 étant enserrée entre le support 14 du boîtier 12 et la pièce 21.

Le réglage de la rotation des traits du réseau est effectué au moyen de deux vis antogonistes 22 et 23 agissant d'une part sur le méplat réalisé sur une portion de cylindre 24 fixé sur l'arrière du support 14 du boîtier 12 du reseau R et d'autre part, sur un méplat de la vis 25, une force de rappel étant fournie par la lame de ressort 26.

Les figures 7A, 7B, 7C illustrent en coupe une fente à ouverture symétrique.

Le boîtier de la fente est constitué par un fond 3 et une pièce cylindrique 2. Deux lèvres mobiles 4 et 5 (figure 7C) sont plaquées sur le fond 3 par une pièce 1. Un bouton de commande non représenté assure une translation de l'axe 6 qui par l'intermédiaire de la bille 8 assure une poussée verticale sur le V formé par la partie supérieure des deux lèvres mobiles 4 et 5, la valeur de l'angle étant choisie de telle façon qu'à 7,5 mm de déplacement vertical de l'axe 6 corresponde une ouverture de 1,5 mm de la fente (à 1/100 de déplacement correspond donc une ouverture de 2 microns). La force antagoniste est obtenue par un ressort 9 et une bille 11 identique à la bille 8, le ressort 9 étant maintenu par une pièce 7 fixée sur la pièce cylindrique 2. Les oeillets 10 (figure 7B) servent au réglage de la verticalité de la fente qui doit être logée dans un boîtier lié à l'enceinte à vide du dispositif spectral.

## Revendications

1. Procédé de focalisation d'un réseau de diffraction sphérique holographique de rayon de courbure R, travaillant par réflexion pour la dispersion des différentes radiations constituant une lumière polychromatique, selon lequel on utilise une fente d'entrée et au moins une fente de sortie ou un détecteur multicanal fixes, le réseau holographique étant fixe, caractérisé en ce que pour une longueur d'onde $\lambda$ et un ordre de diffraction m, tels que m n $\lambda = \sin \alpha + \sin \beta$ et pour une distance objet r = Re, e étant la distance objet réduite par rapport à la valeur du rayon de courbure R du réseau et un angle d'incidence $\alpha$ quelconques, on détermine pour l'angle de diffraction $\beta$ la distance image r' = Re', e' étant la distance image réduite par rapport au rayon de courbure R du réseau par la relation:

$$\tfrac{1}{e} \cos \alpha + \tfrac{1}{e'} \cos \beta + \left(\tfrac{\sin \alpha + \sin \beta}{n \lambda_o}\right)(k_2 - k'_2) = 0$$

$$k_2 = \rho_C - \cos \eta \text{ et } k'_2 = \rho_D - \cos \delta$$

correspondant à la somme des équations des focales sagittales objet et image, relations dans lesquelles n représente le nombre de traits par mm du réseau holographique réalisé à la longueur d'onde laser $\lambda_o$ à partir de l'enregistrement de franges d'interférences générées par deux points sources C et D définis par leurs coordonnées polaires respectivement par rapport au sommet du réseau pour:

$$\text{le point C } \begin{array}{l} r_C = r/\rho_c \\ \eta \end{array} \qquad \text{et le point D } \begin{array}{l} r_D = R/\rho_D \\ \delta \end{array}$$

et tels que:

$$\rho_C = \tfrac{\sin \alpha}{e} = V; \ \rho_D \sin \delta = \tfrac{\sin \beta}{e'} = V'$$

V et V' étant des constantes pouvant être égales entre elles, la répartition d'intensité de l'image diffractée obtenue étant symétrique.

2. Objectif dispersif comportant un réseau de diffraction sphérique holographique ($R_1$) de rayon de courbure (R) travaillant par réflexion corrigé de l'astigmatisme et des comas faisant application du procédé selon la revendication 1, caractérisé en ce que la source (S) et l'un des points d'enregistrement (C) sont sur la normale du réseau ($R_1$) ayant n = $\sin \delta/\lambda_o$ traits/mm, $\lambda_o$ étant la longueur d'onde d'enregistrement de l'hologramme et tel que le point d'enregistrement (C) est à une distance $r_c$ du sommet (O) du réseau de rayon de courbure R et le point source (S) à une distance r telle que

$$\tfrac{1}{r} = \tfrac{1 + P}{R} - \tfrac{P}{r_c}$$

le lieu des images diffractées suivant l'angle $\beta$ tel que, m étant l'ordre de diffraction, $\sin \beta = mn \lambda$ avec $P = \tfrac{m}{2}$ étant un cercle ($P_1$) de rayon R/(2 $\sin \delta$) = R/(2 $\cos \beta_o$), centré sur le rayon diffracté correspondant à la direction $\sin \beta_o = \cos \delta$, et passant par le sommet (O) du réseau et son centre de courbure, le second point d'enregistrement (D) étant défini en coordonnées polaires par $R_D$ et $\delta$ tels que $\sin \delta = n \lambda_o$ et $r_D = \tfrac{r'}{m}$, r' étant la distance image caractérisée par toute distance du sommet du réseau au cercle ($P_1$).

3. Polychromateur comportant une fente située à une distance fixe d'un réseau de diffraction sphérique holographique travaillant par réflexion pour la dispersion des différentes radiations constituant une lumière polychromatique travaillant dans les ordres positifs, pour les longueurs d'ondes $\lambda^x - \Delta\lambda < \lambda^x < \lambda^x + \Delta\lambda$ faisant application du procédé selon la revendication 1 caractérisé en ce que la direction du rayon diffracté correspondant à la longueur d'onde $\lambda^x$ répond à la formule: mn $\lambda^x = \sin \beta^x = \cos \delta = 0,6077$ et dans lequel le lieu de focalisation est un plan (P') faisant un angle d'environ 73°8 avec la direction du rayon diffracté, la distance image pour la longueur d'onde $\lambda^x$ ayant pour valeur r' = R cos $\beta^{x-1}$ = R sin $\delta^{-1}$ ≅ 1,26 R.

4. Objectif dispersif selon la revendication 2, caractérisé en ce que le point d'enregistrement (C) situé sur la normale au réseau étant à une distance:

$r_c = -\frac{r\lambda_0}{\lambda m}$, du sommet (O) du réseau de rayon de courbure R, le point source est situé à une distance r = R (1 - $\frac{m\lambda}{\lambda_0}$) de ce même sommet.

5. Objectif dispersif selon la revendication 2, caractérisé en ce que le lieu des points objets (S) est un cercle (P'₁) de rayon R/(2 | sin η |) = R/(2 cos $\alpha_0$) centré dans la direction ± sin $\alpha_0$ = cos η passant par le sommet du réseau (O) et son centre de courbure (O'), α étant l'angle d'incidence, l'un quelconque des points objets (S) étant à une distance r = Re du sommet du réseau telle que r = R [sin α cotg η + cos α], le point d'enregistrement C étant défini en coordonnées polaires par η et sa distance $r_c$ au sommet du réseau telle que $r_c$ = -r/P avec P= m $\lambda/\lambda_0$, m étant l'ordre de diffraction et $\lambda_0$ la longueur d'onde d'enregistrement de l'hologramme tel que sin α = -P sin η, le lieu des images diffractées suivant l'angle β tel que sin β = P sin δ étant un cercle (P₁) de rayon R/(2 sin δ) = R/(2 cos β) centré sur le rayon diffracté correspondant à la direction sin $\beta_0$ = cos δ, et passant par le sommet (O) du réseau et son centre de courbure, l'un quelconque de points image (B) étant à une distance r' = Re' du sommet du réseau telle que r' = R [sin β cotg δ + cos β], le second point d'enregistrement (D) étant défini par P sin δ = sin β et par sa distance $r_D$ au sommet du réseau telle que $r_D$ = r'/P.

6. Objectif dispersif selon la revendication 2, caractérisé en ce que l'objet est situé sur la normale au réseau, la direction d'observation correspondant à un angle de diffraction β inférieur à 45°, l'un des points d'enregistrement (C) étant situé sur la normale au réseau et le second dans la direction δ tel que δ + β = ε, ε étant une quantité positive très petite vis-à-vis de δ et β, ledit objectif travaillant dans les ordres négatifs.

7. Objectif dispersif selon la revendication 2, caractérisé en ce que l'objet étant situé à l'infini sur la normale au réseau, la longueur d'onde d'observation λ correspondant à l'angle de diffraction β tel que: sin β = P sin δ avec P = m $\lambda/\lambda_0$ est observé sur le cercle P₁ de rayon R/(2 sin δ), l'un des points d'enregistrement C étant situé sur la normale au réseau à une distance $r_c$ = RP/(P+1).

8. Objectif dispersif selon la revendication 2, caractérisé en ce que pour un faisceau venant de l'infini sous un angle α tel que sin α = P sin δ, avec P = m $\lambda/\lambda_0$, l'image diffractée se forme au centre de courbure du réseau, les points d'enregistrement de l'hologramme C [η, rc = ∞] et D [δ, $r_D$ = = ∞] étant positionnés angulairement par rapport à la normale au réseau de telle sorte que: δ + η = 2 α + Π.

9. Objectif dispersif selon la revendication 2, caractérisé en ce que, pour un faisceau incident venant de l'infini sous un angle α tel que sin α = P sin δ avec P = m $\lambda/\lambda_0$, l'image se forme à la distance r' = R sin δ [sin δ + sin (δ - α)]⁻¹, l'un des points d'enregistrement C étant au centre de courbure et l'autre D à l'infini incliné d'un angle δ par rapport à la normale au réseau.

10. Objectif dispersif selon la revendication 2, caractérisé en ce que pour un faisceau incident venant de l'infini sous un angle α, le faisceau diffracté sous un angle β, est diffracté à l'infini, l'angle entre lesdits faisceaux au sommet dudit objectif étant α - β = 2 θ, tel que m λ = 2$\lambda_0$ Cos θ, l'un des points-sources (C) étant au centre de courbure dudit objectif et l'autre D étant à l'infini incliné d'un angle δ par rapport à la normale audit objectif, angle égal à celui formé par la normale à l'objectif et la bissectrice de l'angle 2 θ.

11. Polychromateur selon la revendication 3, travaillant dans les ordres négatifs, pour les longueurs d'ondes $\lambda^x$ - Δλ < $\lambda^x$ < $\lambda^x$ + Δλ caractérisé en ce que la direction du rayon diffracté correspondant à la longueur d'onde $\lambda^x$ répond à la formule mn $\lambda^x$ = sin $\beta^x$, avec tg $\beta^x$ = - sin δ (sin δ + cos δ) avec δ > 45°, le lieu de focalisation étant un cercle centré sur le centre (O'') du cercle de Rowland (R) et de rayon $R_c = \frac{R}{2} (\frac{\sin δ + \cos δ}{\sin δ})$.

12. Polychromateur stigmatique selon la revendication 3, caractérisé en ce que le point source (S) et le point image (S') sont situés sur un cercle (P₂) dont le rayon (aR) est centré sur la tangente au sommet (O) du réseau et qui passe par ce sommet, ledit réseau étant un réseau holographique tel que, si $\lambda_0$ est la longueur d'onde du laser servant à l'enregistrement et n le nombre de traits par mm tel que n $\lambda_0$ = sin δ - sin η, l'hologramme est réalisé à partir de deux points sources C (η, $r_c$) et D (δ, $r_D$) dont la position est définie en coordonnées polaires et tel que $r_c$ = a R sin η et $R_d$ = aR sin δ, a étant un nombre pouvant prendre n'importe quelle valeur entière ou fractionnaire différente de O.

13. Polychromateur stigmatique selon la revendication 3, caractérisé en ce qu'il comprend un miroir torique (M) travaillant au grandissement 1 qui donne du point source (S) une image (S'₁) située sur le cercle (P₂) dont le rayon est centré sur la tangente au sommet du réseau et qui passe par ce sommet, ladite image (S'₁) jouant le rôle d'objet virtuel pour le réseau (R) qui en donne une image réelle stigmatique située sur le cercle (P₂).

## Patentansprüche

1. Verfahren zur Fokussierung mit einem sphärischen holographischen Beugungsgitter mit einem Krümmungsradius R, bei welchem die Dispersion verschiedener, ein vielfarbiges Licht bildender Strahlen durch Reflexion erfolgt, bei dem man einen Eingangsspalt und mindestens einen Ausgangsspalt oder einen Mehrkanaldetektor, die fest sind, verwendet, wobei das holographische Gitter fest ist, dadurch gekennzeichnet, daß man für eine derartige Wellenlänge λ und eine derartige Beugungsordnung m, daß m n λ = sin α + sin β gilt, und für einen Objekt-Abstand r = Re, wobei e der hinsichtlich des Wertes des Krümmungsradius R des Gitters und eines beliebigen Einfallswinkels α reduzierte Objekt-Abstand ist, für den Beugungswinkel β den Bild-Abstand r′=Re′, wobei e′ der hinsichtlich des Krümmungsradius R des Gitters verringerte Bild-Abstand ist, durch die Gleichung bestimmt:

$$\tfrac{1}{e}\cos\alpha + \tfrac{1}{e'}\cos\beta + \left(\tfrac{\sin\alpha + \sin\beta}{n\,\lambda_0}\right)(k_2 - k'_2) = 0,$$

wobei $k_2 = \rho_C - \cos\eta$ und $k'_2 = \rho_D - \cos\delta$

der Summe der Gleichungen der sagittalen Objekt- und Bild-Brennpunkte entspricht, wobei n die Anzahl der Striche pro mm des holographischen Gitters ist, die bei der Laserwellenlänge $\lambda_0$ ausgehend von der Aufnahme der Interferenzstreifen realisiert wird, welche durch zwei Quellenpunkte C und D erzeugt werden, die jeweils durch ihre Polarkoordinaten in Bezug auf den Scheitelpunkt des Gitters definiert werden für:

den Punkt C $\quad r_C = r/\rho_C \quad$ und den Punkt D $\quad r_D = R/\rho_D$

$\eta \qquad\qquad\qquad\qquad\qquad \delta$

derart, daß gilt:

$$\rho_C = \tfrac{\sin\alpha}{e} = V; \; \rho_D \sin\delta = \tfrac{\sin\beta}{e'} = V',$$

wobei V und V′ Konstanten sind, die einander gleich sein können, und die Verteilung der Intensität des erzielten Beugungsbildes symmetrisch ist.

2. Dispersionsobjektiv mit einem sphärischen holographischen Beugungsgitter ($R_1$) mit einem Krümmungsradius (R), das durch korrigierte Reflexion des Astigmatismus und der Komas unter Anwendung des Verfahrens nach Anspruch 1 arbeitet, dadurch gekennzeichnet, daß die Quelle (S) und der eine der Aufnahmepunkte (C) auf der Gitternormalen ($R_1$) liegen, das $n = \sin\delta/\lambda_0$ Striche/mm hat, wobei $\lambda_0$ die Aufnahmewellenlänge des Hologramms ist, derart, daß der Aufnahmepunkt (C) einen solchen Abstand $r_c$ zum Scheitelpunkt (O) des Gitters mit dem Krümmungsradius R und der Quellenpunkt (S) einen solchen Abstand r einnimmt, daß

$$\tfrac{1}{r} = \tfrac{1+P}{R} - \tfrac{P}{r_c}$$

gilt, wobei der Ort der Beugungsbilder dem Winkel β derart folgt, daß, wenn m die Beugungsordnung ist, sin β=mn λ gilt, wobei $P = \tfrac{m\lambda}{\lambda_0}$ einen Kreis ($P_1$) mit dem Radius R/(2 sin δ)=R/(2 cos $\beta_0$) bildet, der auf dem entsprechend der Richtung sin $\beta_0$=cos δ gebeugten Strahl zentriert ist und durch den Scheitelpunkt (O) des Gitters und dessen Krümmungszentrum verläuft, wobei der zweite Aufnahmepunkt (D) in Polarkoordinaten durch $R_D$ und δ derart definiert ist, daß sin δ=n $\lambda_0$ und $rr_D = \tfrac{r'\lambda_0}{m\lambda}$ gilt, wobei r′ der Bild-Abstand ist, der durch jeden Abstand zum Scheitelpunkt des Gitters zum Kreis ($P_1$) gekennzeichnet ist.

3. Vielfarberzeuger mit einem Spalt, der in einem festen Abstand zu einem sphärischen holographischen Beugungsgitter angeordnet ist, der durch Reflexion zur Dispersion der verschiedenen, ein vielfarbiges Licht bildenden Strahlen in positiven Ordnungszahlen für die Wellenlängen $\lambda^x - \Delta\lambda < \lambda^x < \lambda^x + \Delta\lambda$ unter Anwendung des Verfahrens nach Anspruch 1 arbeitet, dadurch gekennzeichnet, daß die Richtung des entsprechend der Wellenlänge $\lambda^x$ gebeugten Strahls der Formel: mn $\lambda^x$=sin $\beta^x$=cos δ=0,6077 entspricht, wobei der Fokussierungsort eine Ebene (P′) ist, die mit der Richtung des gebeugten Strahls einen Winkel von ungefähr 73°8 bildet, wobei der Bild-Abstand für die Wellenlänge $\lambda^x$ den Wert r′= R cos $\beta^{x-1}$= R sin $\delta^{-1} \cong$ 1,26 R hat.

4. Dispersionsobjektiv nach Anspruch 2, dadurch gekennzeichnet, daß der auf der Gitternormalen angeordnete Aufnahmepunkt (C) in einem Abstand: $r_c = \tfrac{r\cdot m}{\lambda}$ zum Scheitelpunkt (O) des Gitters mit dem Krümmungsradius R und der Quellenpunkt in einem Abstand r=R (1 - $\tfrac{m\lambda}{\lambda_0}$) von diesem Scheitelpunkt angeordnet ist.

5. Dispersionsobjektiv nach Anspruch 2, dadurch gekennzeichnet, daß der Ort der Objektpunkte (S) ein Kreis ($P'_1$) mit dem Durchmesser R/(2 | sin η |)=R/(2 cos $\alpha_0$) ist, der in der Richtung ± sin $\alpha_0$=cos η zentriert ist, die durch den Scheitelpunkt des Gitters (O) und dessen Krümmungszentrum (O′) verläuft, wobei α der Einfallswinkel ist, sich einer der Objektpunkte (S) in einem derartigen Abstand r=Re zum Scheitelpunkt des Gitters befindet, daß r=R (sin α cotg η + cos α) gilt, wobei der Aufnahmepunkt C in Polarkoordinaten durch η definiert ist und sein Abstand $r_c$ zum Scheitelpunkt des Gitters derart definiert ist, daß $r_c$=-r/P bei P=m $\lambda/\lambda_0$ gilt, wobei m die Beugungsordnung und $\lambda_0$ die Aufnahmewellenlänge des Hologramms ist, derart, daß sin α=-P sin η gilt, wobei der Ort der Beugungsbilder dem Winkel β derart folgt, daß sin β=P sin δ einen Kreis ($P_1$) mit dem Radius R/(2 sin δ)=R/(2 cos β) bildet, dessen Mittelpunkt auf dem entsprechend der Richtung sin $\beta_0$=cos δ gebeugten Strahl angeordnet ist und durch den Scheitelpunkt (O) des Gitters, und der dessen Krümmungszentrum verläuft, wobei einer der Bildpunkte (B) einen derartigen Abstand r′=Re′ zum Scheitelpunkt des Gitters einnimmt, daß r′=R (sin β cotg δ + cos β) gilt, wobei der zweite Aufnahmepunkt (D) durch P sin δ=sin β und durch einen derartigen Abstand $r_D$ zum Scheitelpunkt des Gitters definiert ist, daß $r_D$=r′/P gilt.

6. Dispersionsobjektiv nach Anspruch 2, dadurch gekennzeichnet, daß das Objekt auf der Gitternormalen angeordnet ist, die Betrachtungsrichtung einem weniger als 45° betragenden Beugungswinkel β entspricht, der eine Aufnahmepunkt (C) auf der Gitternormalen und der zweite in der Richtung δ angeordnet ist, wobei δ + β = ε gilt, wobei ε eine gegenüber δ und β sehr kleine positive Größe ist und das Objektiv in negativen Ordnungszahlen arbeitet.

7. Dispersionsobjektiv nach Anspruch 2, dadurch gekennzeichnet, daß das Objekt, das sich im Unendlichen auf der Gitternormalen befindet, wobei die Betrachtungs-Wellenlänge λ dem Beugungswinkel β entspricht, der so bemessen ist, daß: sin β = P sin δ ist, mit P = m λ/λ_o, auf dem Kreis $P_1$ mit dem Radius R/(2 sin δ) betrachtet wird, wobei der eine der Aufnahmepunkte C mit einem Abstand $r_c$ = RP/(P + 1) von der Gitternormalen angeordnet ist.

8. Dispersionsobjektiv nach Anspruch 2, dadurch gekennzeichnet, daß sich für ein Bündel, das unter einem derartigen Winkel α aus dem Unendlichen kommt, daß sin α = P sin δ mit P = m λ/λ_o gilt, das Beugungsbild im Krümmungszentrum des Gitters bildet, wobei die Aufnahmepunkte C (η, rc = ∞) und D (δ, $r_D$ = ∞) des Hologramms winklig zur Gitternormalen angeordnet sind, daß gilt: δ + η = 2 α + Π.

9. Dispersionsobjektiv nach Anspruch 2, dadurch gekennzeichnet, daß sich für ein einfallendes Bündel, das unter einem derartigen Winkel α aus dem Unendlichen kommt, daß sin α = P sin δ mit P = m λ/λ_o gilt, das Bild in dem Abstand r' = R sin δ [sin δ + sin (δ - α)]$^{-1}$ bildet, wobei der eine der Aufnahmepunkte C im Krümmungszentrum und der andere Aufnahmepunkt D in Bezug auf die Gitternormale unter einem Winkel δ geneigt im Unendlichen liegt.

10. Dispersionsobjektiv nach Anspruch 2, dadurch gekennzeichnet, daß für ein einfallendes Bündel, das unter einem Winkel α aus dem Unendlichen kommt, das unter einem Winkel β gebeugte Bündel im Unendlichen gebeugt wird, wobei der Winkel zwischen diesen Bündeln am Scheitelpunkt des Objektivs α - β = 2θ beträgt, so daß m λ = 2 λ_o cos θ gilt, wobei einer der Quellenpunkte (C) im Krümmungszentrum des Objektivs angeordnet ist und der andere Quellenpunkt D in Bezug auf die Normale des Objektivs unter einem Winkel δ geneigt im Unendlichen angeordnet ist, wobei der Winkel demjenigen gleicht, der durch die Objektivnormale und die Winkelhalbierende des Winkels 2 θ gebildet wird.

11. Vielfarberzeuger nach Anspruch 3, der in negativen Ordnungszahlen arbeitet, für die Wellenlängen λ$^x$ - Δλ < λ$^x$ < λ$^x$ + Δλ, dadurch gekennzeichnet, daß die Richtung des einer Wellenlänge λ$^x$ entsprechenden Beugungsstrahls der Formel mn λ$^x$ = sin β$^x$ mit tg β$^x$ = -sin δ (sin δ + cos δ) unter δ > 45° folgt, wobei der Ort der Fokussierung ein Kreis ist, dessen Mittelpunkt im Zentrum (O'') des Rowland-Kreises liegt und der den Radius $R_c = \frac{R}{2} \left( \frac{\sin \delta + \cos \delta}{\sin \delta} \right)$ hat.

12. Stigmatischer Vielfarberzeuger nach Anspruch 3, dadurch gekennzeichnet, daß der Quellenpunkt (S) und der Bildpunkt (S') auf einem Kreis ($P_2$) angeordnet sind, dessen Radius (aR) auf der Scheitelpunkttangente (O) des Gitters zentriert ist und der durch diesen Scheitelpunkt verläuft, wobei das Gitter ein derartiges holographisches Gitter ist, daß, wenn λ_o die Wellenlänge des zur Aufnahme dienenden Lasers und n die Anzahl der Striche pro mm ist, derart, daß nλ_o = sin δ - sin η, das Hologramm ausgehend von zwei Quellenpunkten C (η, $r_c$) und D (δ, $r_D$) erzeugt wird, deren Position in Polarkoordinaten definiert ist, und derart, daß $r_c$ = a R sin η und $R_d$ = aR sin δ, wobei a eine Zahl, die jeden beliebigen ganzen Wert annehmen kann, oder eine von O abweichende Bruchzahl ist.

13. Stigmatischer Vielfarberzeuger nach Anspruch 3, dadurch gekennzeichnet, daß er einen mit der Vergrößerung 1 arbeitenden torischen Spiegel (M) aufweist, der ein Bild (S'$_1$) des Quellenpunktes (S) gibt, das auf dem Kreis ($P_2$) angeordnet ist, dessen Radius auf der Scheitelpunkttangente des Gitters zentriert ist und der durch diesen Scheitelpunkt verläuft, wobei das Bild (S'$_1$) die Rolle des virtuellen Objektes für das Gitter (R) spielt, das davon ein auf dem Kreis ($P_2$) angeordnetes reelles stigmatisches Bild erzeugt.

## Claims

1. Process for focusing a spherical holographic diffraction grating of radius of curvature R, operating by reflection for the dispersion of the various radiations constituting a polychromatic light beam, according to which an inlet slit and at least one exit slit or a multi-channel detector which are fixed are used, the holographic grating being fixed, characterized in that, for any wavelength λ and diffraction order m, such that m n λ = sin α + sin β and for any object distance r = Re, e being the object distance reduced in relation to the value of the radius of curvature R of the grating and any angle of incidence α, the image distance r' = Re' is determined for the angle of diffraction β, e' being the image distance reduced in relation to the radius of curvature R of the grating by the relation:

$$\frac{1}{e} \cos \alpha + \frac{1}{e'} \cos \beta + \left( \frac{\sin \alpha + \sin \beta}{n \lambda_o} \right) (k_2 - k'_2) = 0$$

$$k_2 = \rho_C - \cos \eta \quad \text{and} \quad k'_2 = \rho_D - \cos \delta$$

corresponding to the sum of the equations of the sagittal object and image foci, these being relations in which n represents the number of lines per mm of the holographic grating produced at the laser wavelength λ_o on the basis of the recording of interference fringes generated by two point sources C and D defined by their polar coordinates respectively in relation to the summit of the grating for:

the point C $\quad r_C = r/\rho_C \quad$ and the point D $\quad r_D = R/\rho_D$

$\eta \quad\quad\quad\quad\quad\quad\quad\quad \delta$

and such that:

$$\rho_C = \frac{\sin \alpha}{e} = V; \quad \rho_D \sin \delta = \frac{\sin \beta}{e} = V'$$

V and V' being constants which may be equal to each other, the intensity distribution of the diffracted image obtained being symmetrical.

2. Dispersive objective comprising a spherical holographic diffraction grating ($R_1$) of radius of curvature (R), operating by reflection, corrected for astigmatism and comas by applying the process according to Claim 1, characterized in that the source (S) and one of the recording points (C) are on the normal of the grating ($R_1$) having $n = \sin \delta / \lambda_0$ lines/mm, $\lambda_0$ being the recording wavelength of the hologram and such that the recording point (C) is at a distance $r_c$ from the summit (O) of the grating of radius of curvature R and the source point (S) at a distance r such that

$$\frac{1}{r} = \frac{1 + P}{R} - \frac{P}{r_c}$$

the location of the diffracted images, with the angle $\beta$ such that, m being the diffraction order, $\sin \beta = mn\,\lambda$ with $P = \frac{m\lambda}{\lambda_0}$ being a circle ($P_1$) of radius $(R/2 \sin \delta) = R/(2 \cos \beta_0)$, centered on the diffracted ray corresponding to the direction $\sin \beta_0 = \cos \delta$, and passing through the summit (O) of the grating and its centre of curvature, the second recording point (D) being defined in polar coordinates by $R_D$ and $\delta$ such that $\sin \delta = n\,\lambda_0$ and $r_D = \frac{r'-\rho}{m\lambda}$, r' being the image distance characterized by any distance from the summit of the grating to the circle ($P_1$).

3. Polychromator comprising a slit situated at a fixed distance from a spherical holographic diffraction grating, operating by reflection, for the dispersion of the various radiations constituting a polychromatic light beam operating in the positive orders, for wavelengths $\lambda^x - \Delta\lambda < \lambda^x < \lambda^x + \Delta\lambda$ by applying the process according to Claim 1, characterized in that the direction of the diffracted ray corresponding to the wavelength $\lambda^x$ satisfies the formula: $mn\,\lambda^x = \sin \beta^x = \cos \delta = 0.6077$ and in which the location of focusing is a plane (P') making an angle of approximately 73°8 with the direction of the diffracted ray, the image distance for the wavelength $\lambda^x$ having as its value $r' = R \cos \beta^{x-1} = \sin \delta^{-1} \cong 1.26 R$.

4. Dispersive objective according to Claim 2, characterized in that the recording point (C) situated on the normal to the grating being at a distance: $r_c = \frac{\lambda_0}{\lambda m}$, from the summit (O) of the grating of radius of curvature R, the source point is situated at a distance $r = R(1 - \frac{m\lambda}{\lambda_0})$ from said summit.

5. Dispersive objective according to Claim 2, characterized in that the location of the object points (S) is a circle ($P'_1$) of radius $R/(2 | \sin \eta |) = R/(2 \cos \alpha_0)$ centered in the direction $\pm \sin \alpha_0 = \cos \eta$ passing through the summit of the grating (O) and its centre of curvature (O'), $\alpha$ being the angle of incidence, any one of the object points (S) being at a distance $r = Re$ from the summit of the grating such that $r = R [\sin \alpha \cot \eta + \cos \alpha]$, the recording point C being defined in polar coordinates by $\eta$ and its distance $r_c$ to the summit of the grating such that $r_c = -r/P$ with $P = m \lambda / \lambda_0$, m being the diffraction order and $\lambda_0$ the recording wavelength of the hologram such that $\sin \alpha = -P \sin \eta$, the location of the diffracted images with the angle $\beta$ such that $\sin \beta = P \sin \delta$ being a circle ($P_1$) of radius $R/(2 \sin \delta) = R/(2 \cos \beta)$ centered on the diffracted ray corresponding to the direction $\sin \beta_0 = \cos \delta$, and passing through the summit (O) of the grating and its centre of curvature, any one of image points (B) being at a distance $r' = Re'$ from the summit of the grating such that $r' = R[\sin \beta \cot \delta + \cos \beta]$, the second recording point (D) being defined by $P \sin \delta = \sin \beta$ and by its distance $r_D$ to the summit the grating such that $r_D = r'/P$.

6. Dispersive objective according to Claim 2, characterized in that the object is situated on the normal to the grating, the direction of observation corresponding to an angle of diffraction $\beta$ less than 45°, one of the recording points (C) being situated on the normal to the grating and the second in the direction $\delta$ such that $\delta + \beta = \varepsilon$, $\varepsilon$ being a positive quantity which is very small in relation to $\delta$ and $\beta$, said objective operating in the negative orders.

7. Dispersive objective according to Claim 2, characterized in that, the object being situated at infinity on the normal to the grating, the observation wavelengths $\lambda$ corresponding to the angle of diffraction $\beta$ such that: $\sin \beta = P \sin \delta$ with $P = m \lambda/\lambda_0$ is observed on the circle $P_1$ of radius $R/(2 \sin \delta)$, one of the recording points C being situated on the normal to the grating at a distance $r_c = RP/(P + 1)$.

8. Dispersive objective according to Claim 2, characterized in that, for a beam coming from infinity at an angle $\alpha$ such that $\sin \alpha = P \sin \beta$, with $P = m \lambda/\lambda_0$, the diffracted image is formed at the centre of curvature of the grating, the recording points of the hologram $c[\eta, r_c = \infty]$ and $D[\delta, r_D = \infty]$ being positioned angularly in relation to the normal to the grating, in such a manner that: $\delta + \eta = 2 \alpha + \pi$.

9. Dispersive objective according to Claim 2, characterized in that, for an incident beam coming from infinity at an angle $\alpha$ such that $\sin \alpha = p \sin \delta$ with $P = m \lambda/\lambda_0$, the image is formed at the distance $r' = R \sin \delta [\sin \delta + \sin (\delta-\alpha)]^{-1}$ one of the recording points C being at the centre of curvature and the other D at infinity, inclined at

an angle $\delta$ in relation to the normal to the grating.

10. Dispersive objective according to Claim 2, characterized in that, for an incident beam coming from infinity at an angle $\alpha$, the diffracted beam at an angle $\beta$ is diffracted at infinity, the angle between said beams at the summit of said objective being $\alpha - \beta = 2\theta$, such that $m\lambda = 2\lambda_0 \cos\theta$, one of the source points (C) being at the centre of curvature of said objective and the other D being at infinity, inclined at an angle $\delta$ in relation to the normal to said objective, said angle being equal to that formed by the normal to the objective and the bisector of the angle $2\theta$.

11. Polychromator according to Claim 3, operating in the negative orders, for the wavelengths $\lambda^x - \Delta\lambda < \lambda^x < \lambda^x + \Delta\lambda$ characterized in that the direction of the diffracted ray corresponding to the wavelength $\lambda^x$ satisfies the formula $mn\lambda^x = \sin\beta^x$, with $\tan\beta^x = -\sin\delta (\sin\delta + \cos\delta)$ with $\delta > 45°$, the location of focusing being a circle centered on the centre (O'') of the Rowland circle (R) and of radius

$$R_c = \frac{R}{2} \left( \frac{\sin\delta + \cos\delta}{\sin\delta} \right).$$

12. Stigmatic polychromator according to Claim 3, characterized in that the source point (S) and the image point (S') are situated on a circle $(P_2)$, the radius of which (aR) is centered on the tangent to the summit (O) of the grating and which passes through this summit, said grating being a holographic grating such that, if $\lambda_0$ is the wavelength of the laser serving for recording and n the number of lines per mm such that $n\lambda_0 = \sin\delta - \sin\eta$, the hologram is constructed on the basis of two source points C $(\eta, r_c)$ and D $(\delta, r_D)$, the position of which is defined in polar coordinates and such that $r_c = aR\sin\eta$ and $R_d = aR\sin\delta$, a being a number wich can have any integral or fractional value whatsoever different from 0.

13. Stigmatic polychromator according to Claim 3, characterized in that it comprises a toric mirror (M) operating at the magnification 1, which creates from the source point (S) an image $(S'_1)$ situated on the circle $(P_2)$, the radius of which is centered on the tangent to the summit of the grating and which passes through this summit, said image $(S'_1)$ fulfilling the function of a virtual object for the grating (R), which creates therefrom a stigmatic real image situated on the circle $(P_2)$.

FIG.1 ART ANTERIEUR

FIG.1A
ART ANTERIEUR

FIG.2

1

FIG.3

FIG.4

$\lambda^x$ et n en fonction de C

FIG.5

FIG.6A

FIG.6B

FIG.6C

7

FIG.7A

FIG.7B

FIG.7C

FIG.8

FIG.9

$$\alpha = \delta + \theta$$
$$\beta = \delta - \theta$$

FIG.10

11